Europäisches Patentamt

European Patent Office

Office européen des brevets

(19)

(11) Numéro de publication: **0 249 550 B1**

(12) **FASCICULE DE BREVET EUROPEEN**

(45) Date de publication de fascicule du brevet:
**16.10.91**

(51) Int. Cl.⁵: **B29C 51/16**

(21) Numéro de dépôt: **87401286.7**

(22) Date de dépôt: **09.06.87**

(54) **Dispositif de préformage et de transfert d'une banderole dans une installation de thermoformage de récipients.**

(30) Priorité: **09.06.86 FR 8608295**

(43) Date de publication de la demande:
**16.12.87 Bulletin 87/51**

(45) Mention de la délivrance du brevet:
**16.10.91 Bulletin 91/42**

(84) Etats contractants désignés:
**CH DE ES FR GB IT LI SE**

(56) Documents cités:
**FR-A- 2 034 915      FR-A- 2 206 168
FR-A- 2 340 191      FR-A- 2 403 177
FR-A- 2 425 926      FR-A- 2 454 892
FR-A- 2 528 349      FR-A- 2 528 355**

(73) Titulaire: **ERCA HOLDING, S.A.R.L.
Zone Industrielle de Courtaboeuf Avenue du
Pacifique
F-91942 les Ulis Cedex(FR)**

(72) Inventeur: **Hautemont, Jean-Claude
18 Domaine de Miremont
F-91190 Gif-sur-Yvette(FR)**

(74) Mandataire: **Hasenrader, Hubert et al
Cabinet BEAU DE LOMENIE 55, rue d'Amsterdam
F-75008 Paris(FR)**

## Description

La présente invention concerne un dispositif de préformage et de transfert d'une banderole décorative ou non dans une installation de thermoformage de récipients qui comprend un bloc de moulage muni d'une pluralité de chambres cylindriques verticales de formage, ouvertes vers le haut et présentant à leur extrémité inférieure une ouverture susceptible d'être fermée par un élément de fond mobile par rapport au bloc de moulage de façon à être coiffé par la chambre de formage correspondante mobile avec le bloc de moulage entre une position haute dite de thermoformage et une position basse dite de démoulage des récipients, dispositif du type comprenant :
- une pluralité de bandes individuelles d'un nombre égal à celui des chambres de formage prévues dans le bloc de moulage, bandes individuelles desquelles sont découpées transversalement des banderoles,
- au moins un rouleau de guidage à position réglable pour chacune des bandes individuelles,
- une unité de préenroulement des banderoles disposée en dessous du bloc de moulage qui repose sur celle-ci, montée sur un plateau de support mobile verticalement entre une position correspondant à la position de thermoformage et une position correspondant à la position de démoulage du bloc de moulage, et qui comprend une pluralité de chambres cylindriques verticales de préenroulement alignées chacune avec une des chambres de formage, de façon à constituer, par son bord supérieur, un épaulement annulaire de retenue qui délimite en même temps l'ouverture de fond de la chambre de formage,
- une unité d'introduction et de découpe d'une banderole, par chambre de préenroulement dont une partie de la paroi latérale verticale comprend, une fente verticale d'accès débouchant obliquement dans la chambre de préenroulement, un couteau susceptible de coopérer avec une contre-lame pour découper l'extrémité arrière de la banderole introduite au moins partiellement dans la chambre de préenroulement, et une paire de rouleaux d'introduction disposée en amont du couteau et de la fente et susceptible d'entraîner la bande individuelle pincée entre ses deux rouleaux d'un pas égal à la longueur d'une banderole,
- un organe conformateur dont la tige traverse la chambre de préenroulement et dont la partie supérieure, d'une part, constitue au moins une partie de la plaque de fond et présente une section transversale de forme analogue mais inférieure à celle de la paroi verticale de la chambre de formage de sorte que la distance entre la paroi verticale de la chambre de formage et la face périphérique de l'éxtrémité supérieure du conformateur soit au moins égale à l'épaisseur d'une banderole, et, d'autre part est susceptible de pénétrer dans la chambre de formage, et
- un organe de transfert prévu dans la chambre annulaire de guidage et de préenroulement, solidaire dudit organe conformateur et susceptible de supporter la banderole jusqu'à ce que celle-ci ait été transférée à la chambre de formage par un mouvement relatif entre ledit organe de transfert et ladite chambre de formage.

Des installations de thermoformage de récipients et munies d'un dispositif de préformage et de transfert de banderoles décoratives ou non du type susmentionné sont connues d'une façon générale par le certificat d'addition français 2 340 185 pris en combinaison avec le brevet français 2 256 013 auquel se réfère ledit certificat d'addition.

Dans le cas du brevet français 2 256 013, l'introduction des banderoles s'effectue à travers le fond ouvert des chambres de formage en dessous desquelles est prévue l'unité de préenroulement et de transfert des banderoles qui ne comporte pas de conformateur.

Des dispositifs de préformage et de transfert de banderoles munis d'un conformateur pour chacune des chambres de formage du bloc de moulage superposé à l'unité de préenroulement des banderoles sont connus, par exemple, par le certificat d'addition français 2 340 185 et par les brevets français 2 339 474, 2 342 145, 2 528 349 et 2 528 355. Un des inconvénients de ces dispositifs de préformage connus réside dans le fait que l'extrémité amont de la bande individuelle (de laquelle est découpée la banderole) est éloignée de la chambre de préenroulement d'une certaine distance et doit être introduite par traction dans la chambre de préenroulement (certificat d'addition FR-2 340 185, brevets FR 2 528 349, et 2 528 355) ou que l'extrémité de la bande individuelle doit être retirée de la fente d'accès à la chambre de préenroulement après la découpe d'une banderole (brevets FR 2 339 474, 2 342 145 et 2 528 355), ce qui constitue un temps mort improductif et entraîne des risques de blocage de la banderole ou de l'extrémité libre de la bande individuelle lors du cycle de préenroulement de la banderole suivante.

La réalisation des bandes individuelles à partir d'une bande-mère ainsi que les moyens nécessaires à cet effet sont connus par les brevets FR 2 034 915 et 2 454 892. Ces moyens sont installés à poste fixe, de sorte que la longueur des tronçons de bandes individuelles compris entre la bande-mère et la fente d'accès aux chambres de préenroulement varie à chaque mouvement vertical du bloc de moulage ; cette variation des longueurs introduit dans les bandes des tensions néfastes et irrégulières.

Des conformateurs susceptibles de pénétrer dans la chambre de formage par le fond de celle-ci et qui sont associés à un organe de transfert prévu dans la chambre de préenroulement ont déjà été proposés par exemple par ledit certificat d'addition FR 2 340 185 et les brevets français 2 528 349 et 2 528 355.

Dans le cas de cet état de la technique, le temps disponible pour l'enroulement de la banderole et sa découpe dans la chambre de préenroulement est maximum par rapport au temps prévu entre deux courses successives de transfert des banderoles de la chambre de préenroulement à la chambre de formage, mais ce mode de réalisation nécessite une structure mécanique compliquée qui est relativement fragile et interdit, de ce fait, des cadences élevées de déplacement du bloc de moulage entre sa position de formage et sa position de transfert.

On constate que, dans les dispositifs connus et compte tenu des positions relatives entre la chambre de formage, l'unité d'introduction et de découpe d'une banderole, et l'organe de transfert, le temps alloué à la préparation d'une banderole enroulée est insuffisant. Cette insuffisance de temps est d'autant plus gênante lorsqu'il s'agit de préparer des banderoles de grande longueur qui, déjà dans la chambre de préenroulement, doivent avoir une forme très similaire à celle de la chambre de formage.

La présente invention a pour but de supprimer, ou tout au moins d'atténuer les inconvénients susmentionnés dans le cadre d'un dispositif de préformage du genre initialement défini.

Ce but est atteint, conformément à l'invention, du fait que le dispositif précité comporte, en outre,

- un rouleau de support de bande-mère monté dans des paliers à poste fixe, et
- une unité de découpe longitudinale de la bande-mère en bandes individuelles, montée sur un plateau de support écarté latéralement du bloc de moulage, et que
- la tige de l'organe conformateur forme avec la paroi verticale de la chambre de préenroulement une chambre annulaire étroite de guidage,
- la distance entre l'extrémité supérieure du conformateur et l'organe de transfert est, d'une part, au moins égale à la distance axiale entre le fond de la fente d'accès et la partie centrale de la chambre de formage et, d'autre part, inférieure à la distance entre l'extrémité supérieure de la chambre de formage en position de thermoformage et l'extrémité inférieure de ladite chambre de formage en position de démoulage ;

- l'ensemble des éléments constitutifs de l'unité d'introduction et de découpage d'une banderole, d'une part, est rendu solidaire de l'unité de préenroulement à l'aide d'une plaque-support dans laquelle est ménagée ladite fente d'accès et dont la face intérieure forme une partie de la paroi latérale verticale de la chambre de préenroulement et, d'autre part à l'exception du couteau et de la contre-lame, est installé en permanence devant ladite fente d'accès à ladite chambre de préenroulement ;
- le plateau de support de l'unité de découpe longitudinale de la bande-mère en bandes individuelles est monté mobile verticalement en synchronisme avec les mouvements du plateau de support de l'unité de préenroulement et du bloc de moulage, et
- un rouleau de tension est prévu sur le trajet de la bande-mère entre son rouleau de support et l'unité de découpe longitudinale, ce rouleau de tension étant appliqué contre la bande-mère de façon à compenser les variations de longueur du tronçon de bande-mère déroulé dues aux déplacements verticaux de l'unité de préenroulement des banderoles.

Grâce à cette conception, l'enroulement et la découpe d'une nouvelle banderole peut déjà s'effectuer pendant l'opération de thermoformage d'un récipient au cours de laquelle l'extrémité supérieure du conformateur se trouve encore dans la partie centrale de la chambre de formage et descend progressivement vers l'ouverture de fond de celle-ci. En outre, la partie extrême libre de la bande individuelle à partir de laquelle on découpe la banderole suivante se trouve en permanence engagée, soit dans la fente de la contre-lame du couteau, soit dans la fente d'accès qui agit en tant que contre-lame, de sorte que l'extrémité libre de la bande individuelle est encore guidée en aval de la paire de rouleaux d'introduction et que l'introduction de cette bande individuelle dans la chambre de préenroulement pourra se faire sans difficultés et avec une vitesse de défilement élevée.

L'invention sera encore mieux comprise à l'aide de la description suivante de plusieurs modes de réalisation non limitatifs représentés sur les dessins annexés sur lesquels :

- la figure 1 est une vue en plan d'un poste de thermoformage de récipients d'une installation de conditionnement d'un produit, poste de thermoformage auquel est incorporé un premier mode de réalisation du dispositif de préformage et de transfert d'une banderole décorative ou non, conforme à l'invention ;

- la figure 2 est une vue latérale en élévation du poste de thermoformage avec le dispositif de préformage et de transfert d'une banderole décorative, selon la figure 1 ;
- les figures 3 à 5 sont des vues en élévation d'une coupe transversale verticale à travers une chambre de formage du bloc de moulage, de l'unité de préenroulement et de l'unité d'introduction et de découpe d'une banderole du dispositif de préformage et de transfert, ces vues montrant différentes positions de travail de l'unité de préenroulement, du bloc de moulage et du conformateur ;
- la figure 6 est une vue partielle en plan d'une coupe horizontale de l'unité de préenroulement et de l'unité d'introduction et de découpe du dispositif de préformage et de transfert d'une banderole, cette coupe étant faite à l'extrémité supérieure de la fente d'accès ;
- la figure 7 est une vue latérale en élévation montrant un détail de l'unité d'introduction et de découpe selon la figure 6 dans le cadre du premier mode de réalisation ;
- les figures 8 et 9 sont des vues partielles en élévation d'une coupe verticale (selon la ligne VIII-VIII de la figure 6) à travers les parois latérales du bloc de moule, de l'unité de préenroulement et du conformateur, et montrant le bloc de moulage respectivement écarté légèrement (de quelques millimètres) de l'unité de préenroulement (figure 8) et reposant sur ladite unité (figure 9) ;
- la figure 10 est une vue en plan d'un poste de thermoformage de récipients d'une installation de conditionnement d'un produit liquide ou pâteux, poste de thermoformage auquel est incorporé un deuxième mode de réalisation du dispositif de transfert et de préformage d'une banderole, conforme à l'invention ;
- la figure 11 est une vue latérale en élévation du poste de thermoformage et d'une coupe verticale selon la ligne XI-XI du dispositif de préformage et de transfert d'une banderole selon la figure 10 ;
- les figures 12 et 13 sont des vues en élévation d'une coupe transversale à travers la chambre de formage du bloc de moulage, de l'unité de préenroulement et de l'unité d'introduction et de découpe d'un deuxième mode de réalisation du dispositif de préformage et de transfert, coupe suivant la ligne brisée XII-XII de la figure 14, ces vues montrant le bloc de moulage en position de formage et en position de démoulage respectivement, et le conformateur en différentes positions de travail ; et
- les figures 14 à 17 sont des vues en plan d'une coupe transversale horizontale selon la ligne XIV-XIV de la figure 12, au niveau de l'unité d'introduction et de découpe et de l'unité de préenroulement du deuxième mode de réalisation du dispositif de préformage et de transfert.

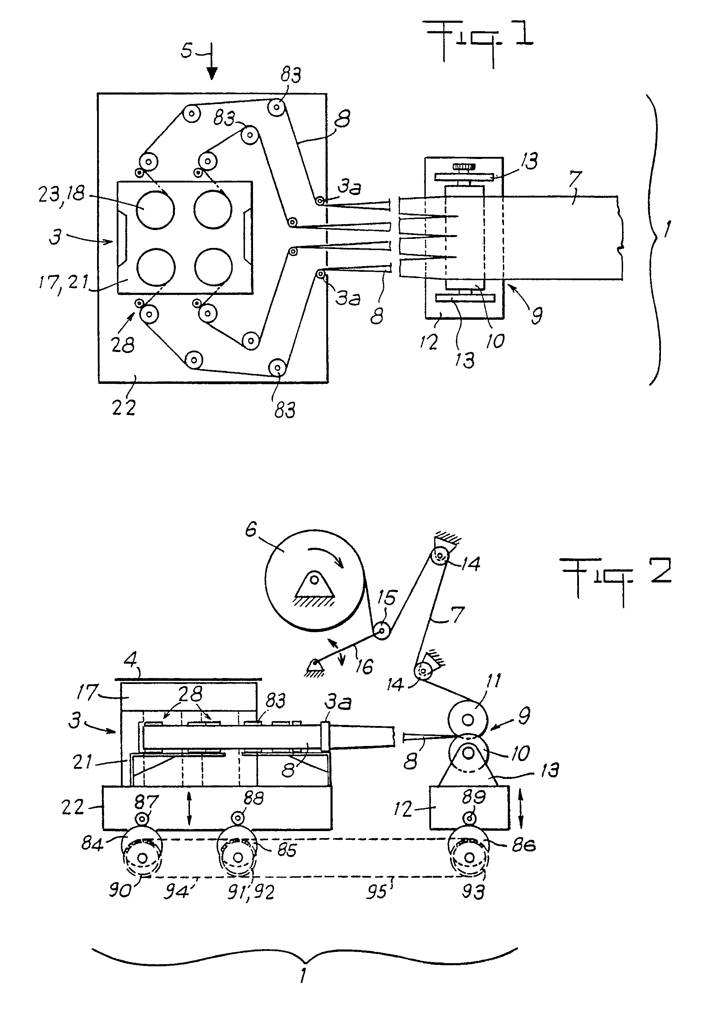

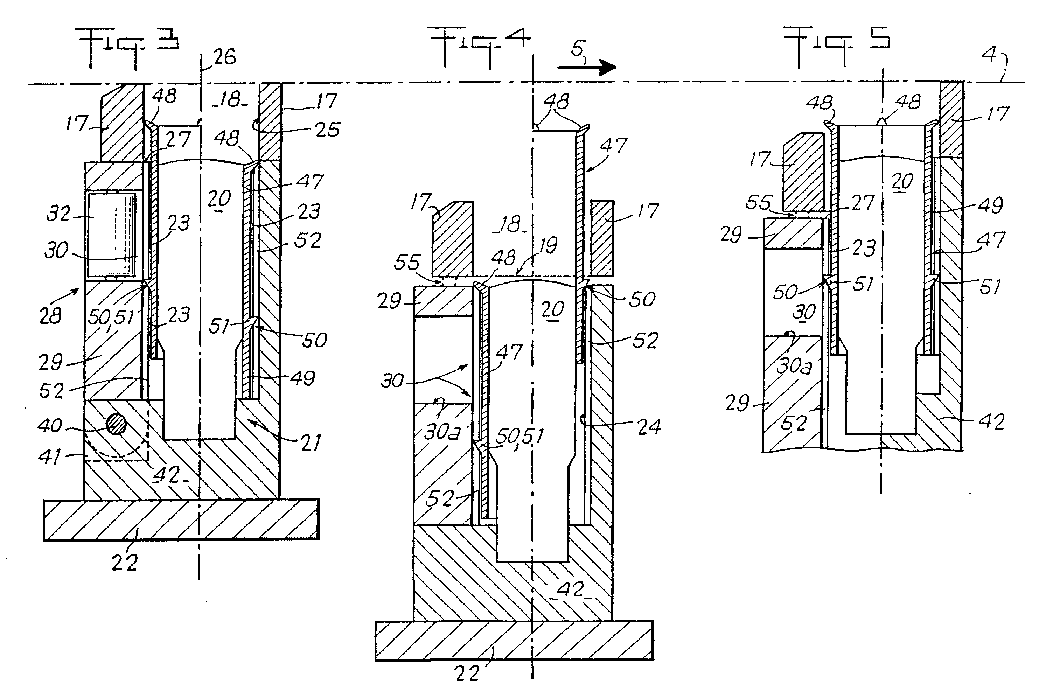

Sur les figures 1 et 2, est représentée la structure générale d'un premier mode de réalisation du dispositif de préformage et de transfert 1 d'une banderole 2. Ce dispositif 1 est associé à un poste de thermoformage 3 faisant partie d'une installation de conditionnement non représentée, du type qui thermoforme des récipients à partir d'une bande thermoplastique 4, les remplit avec un produit et obture les récipients remplis avec une bande à couvercles avant de les découper de la bande thermoplastique et de la bande à couvercles scellée à cette dernière. Ce type d'installation est connu dans l'état de la technique et ne nécessite pas de description détaillée.

Une partie du dispositif de préformage et de transfert 1 est disposée en dessous du trajet de défilement de la bande thermoplastique 4 qui se déplace pas à pas en direction de la flèche 5. Ce dispositif 1 comprend latéralement à une certaine distance d'un premier rouleau ou cylindre de renvoi vertical 3a du poste de thermoformage 3 un rouleau de support 6 pour une bande-mère 7 à partir de laquelle sont découpées longitudinalement des bandes individuelles 8 ayant une largeur correspondant à la hauteur (ou largeur) des banderoles 2 qui seront découpées transversalement à partir de chacune des bandes individuelles 8. La découpe longitudinale de la bande-mère 7 en bandes individuelles 8 est réalisée à l'aide d'une unité de découpe longitudinale 9 de structure connue (voir par exemple FR-A 2 034 915 et 2 403 177) et comprenant un rouleau inférieur à à lames annulaires 10 et un rouleau presseur supérieur à contre-lames 11 entre lesquels passe la bande-mère 7 tout en étant découpée longitudinalement en bandes individuelles 8. Ces rouleaux à lames 10, 11 de l'unité de découpe longitudinale 9 assurent en même temps l'avancement pas à pas de la bande-mère 7 et des bandes individuelles 8, sont entraînés de façon appropriée en synchronisme avec l'introduction des banderoles 2 et l'avancement des bandes individuelles 8, et sont montés sur un plateau de support ou organe analogue par l'intermédiaire de paliers latéraux 13 solidaires dudit plateau 12. D'une façon générale, ce plateau de support ou élément analogue 12 est mobile.

Selon un premier mode de réalisation, ce plateau de support 12 est mobile verticalement. Entre les rouleaux à lames 10, 11 de l'unité de découpe longitudinale 9 et le rouleau de support 6 de la bande-mère 7 sont prévus par exemple au moins un rouleau de renvoi à poste fixe 14 et un rouleau de tension 15 porté par l'extrémité d'un levier danseur 16 articulé à son autre extrémité autour d'un axe fixe et coopérant avec un ressort, non représenté, de façon à solliciter en permanence ledit rouleau de tension 15 contre la bande-mère 7 pour maintenir constante la tension de celle-ci malgré les variations de longueur du tronçon de bande-mère entre le rouleau de support 6 et l'unité de découpe longitudinale 9, variations provoquées par les déplacements cycliques par exemple verticaux du plateau de support 12 et de l'unité de découpe longitudinale 9.

Au poste de formage 3, le dispositif de préformage et de transfert 1 comprend en dessous du trajet de la bande thermoplastique 4 un bloc de moulage 17 muni d'une pluralité de chambres cylindriques verticales de formage 18, ouvertes vers le haut et présentant, à leur extrémité inférieure, une ouverture de passage 19 qui peut être fermée au moins partiellement par un élément de fond 20 susceptible de se déplacer verticalement soit par rapport au bloc de moulage 17 soit avec ce dernier, ledit bloc de moulage 17 pouvant être immobilisé ou se déplacer verticalement aussi indépendamment dudit élément de fond 20.

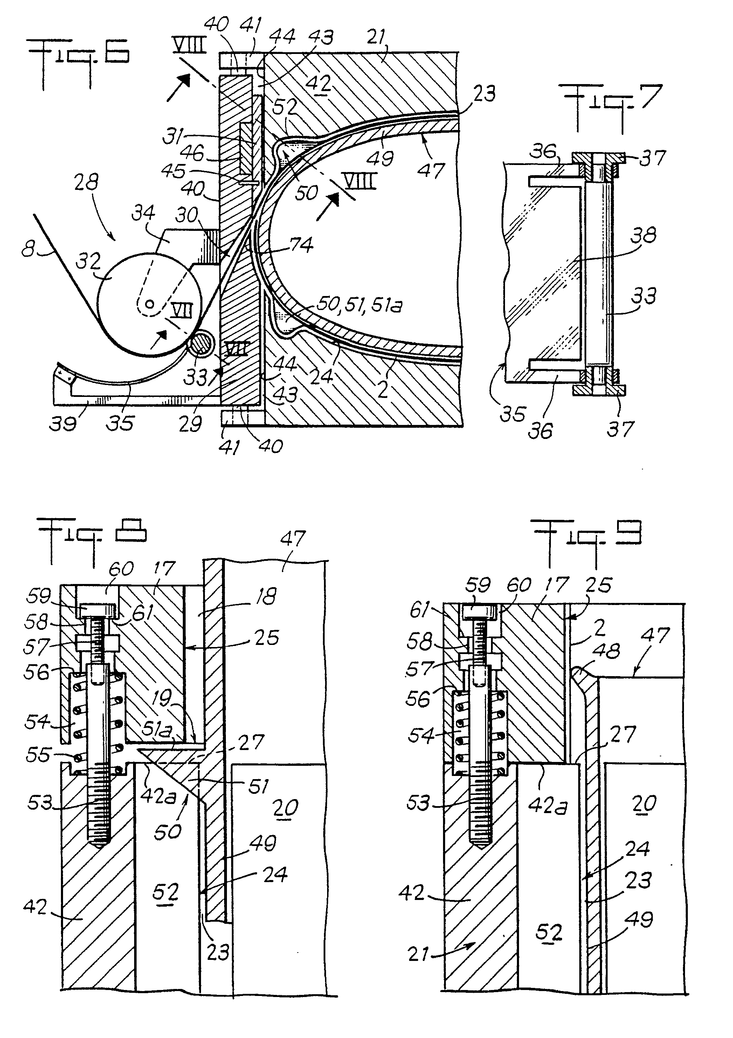

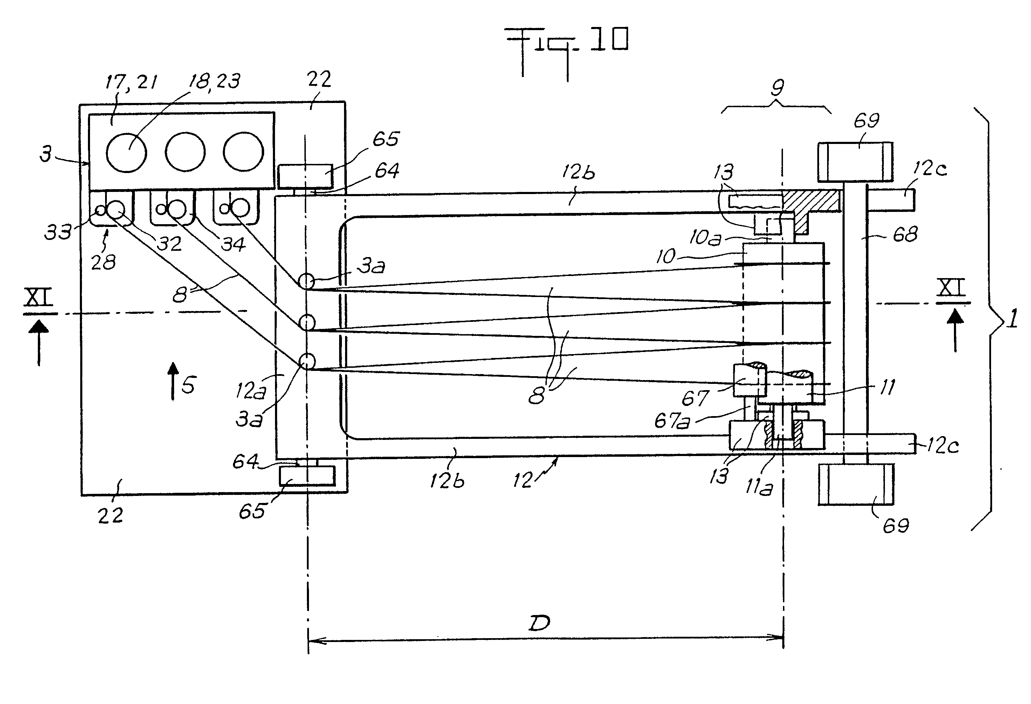

Ce bloc de moulage 17 qui, notamment dans le cas où les récipients à thermoformer sont très larges et longs et peu profonds, peut présenter une hauteur relativement faible est monté verticalement mobile entre une position haute correspondant à la position de thermoformage des chambres de formage 18 (voir figures 3 et 12) et une position basse correspondant à la position de démoulage des chambres de formage (voir figures 4 et 13) dans laquelle le récipient qui vient être thermoformé peut être avancé horizontalement d'un pas sans être gêné par le bloc de moulage 17.

Le dispositif de préformage et de transfert 1 comprend également une unité de préenroulement 21 des banderoles décoratives 2. Cette unité de préenroulement 21 est disposée en dessous du bloc de moulage 17 qui repose sur la face supérieure de celle-ci. L'unité de préenroulement 21 et par conséquent aussi le bloc de moulage 17 sont montés à l'état superposé sur un plateau de support 22 qui est verticalement mobile entre une position haute correspondant à la position de thermoformage des récipients (figures 3 et 12) et une position basse (figures 4 et 13) correspondant à la position de démoulage du bloc de moulage 17 et de ses chambres de formage 18. Cette unité de préenroulement 21 comprend une pluralité de chambres cylindriques verticales de préenroulement 23 disposées en dessous des chambres de formage 18 avec lesquelles elles communiquent à travers leur ouverture supérieure et sont alignées chacune avec l'une des chambres de formage 18 de sorte que leur paroi verticale 24 délimite un pourtour homothétique à celui de la paroi verticale

25 de la chambre de formage correspondante 18 mais légèrement inférieur au pourtour de celle-ci de façon à constituer, par leur bord supérieur, un épaulement annulaire de retenue 27 qui délimite en même temps l'ouverture de fond 19 de la chambre de formage 18.

En outre, le dispositif de préformage et de transfert 1 présente, par chambre de préenroulement 23, une unité d'introduction et de découpe transversale 28 d'une banderole 2, cette unité comprenant une plaque-support 29 accolée à la chambre de préenroulement 23 de sorte que la face intérieure de ladite plaque-support 29 constitue une partie plus ou moins importante de la paroi latérale verticale 24 de ladite chambre de préenroulement 23. Cette unité d'introduction et de découpe transversale 28 comprend, d'une part, une fente verticale d'accès 30 ménagée selon un premier mode de réalisation, directement dans la plaque-support 29 et débouchant obliquement à partir de l'extérieur dans la chambre de préenroulement 23 et associée, à la face intérieure de la plaque-support 29, à un couteau 31 susceptible de coopérer avec l'un des bords intérieurs de la fente d'accès 30 pour découper l'extrémité arrière de la banderole 2 qui au préalable a été complètement introduite dans la chambre de préenroulement 23, et, d'autre part, une paire de rouleaux d'introduction 32, 33 disposés devant l'entrée évasée de la fente d'accès 30 et montés dans des paliers solidaires de la plaque-support 29. La partie extrême d'une bande individuelle 8 est pincée entre les rouleaux 32, 33 d'une paire de rouleaux d'introduction qui sont animés cycliquement d'un mouvement de rotation de sorte que la longueur déroulée du pourtour d'un des rouleaux d'introduction 32, 33 soit légèrement supérieure à la longueur d'un pas d'avancement de la bande individuelle 8 qui est avancée sous l'action des rouleaux à lames 10, 11 d'un pas égal à la longueur d'une banderole 2. Dès que la longueur d'une banderole 2 a été débitée par les rouleaux d'introduction 32, 33, l'avancement des bandes individuelles est interrompu par les rouleaux à lames 10, 11 et les rouleaux d'introduction 32, 33 commencent patiner sur la bande individuelle correspondante. Grâce à cette disposition et au réglage approprié de la pression des rouleaux d'introduction sur la bande individuelle, il est assuré que celle-ci soit constamment tendue sans être allongée.

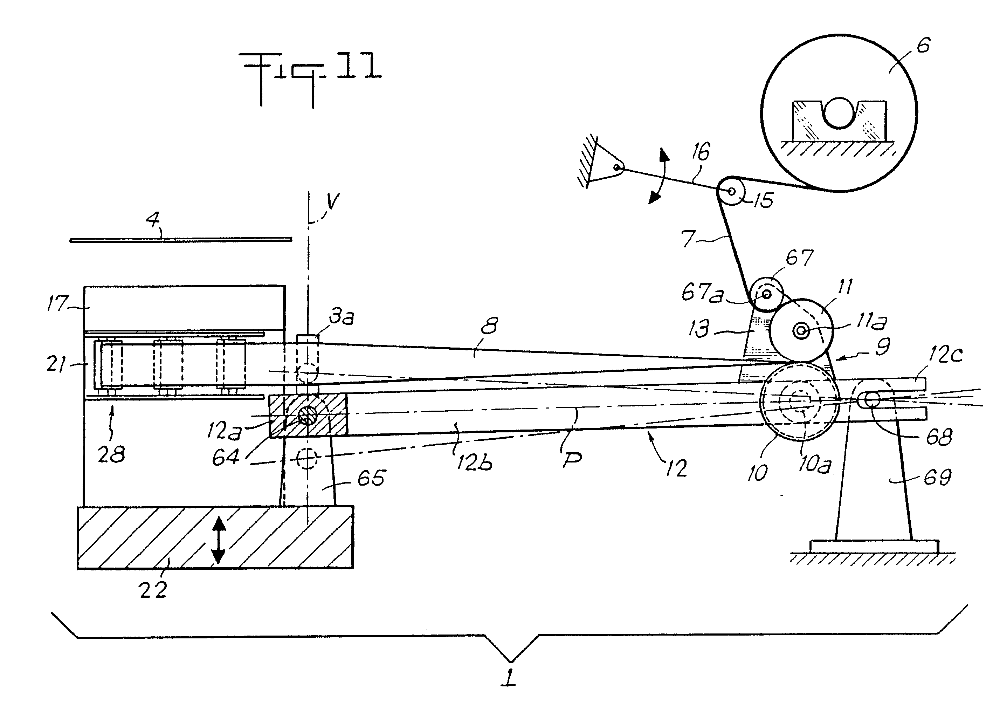

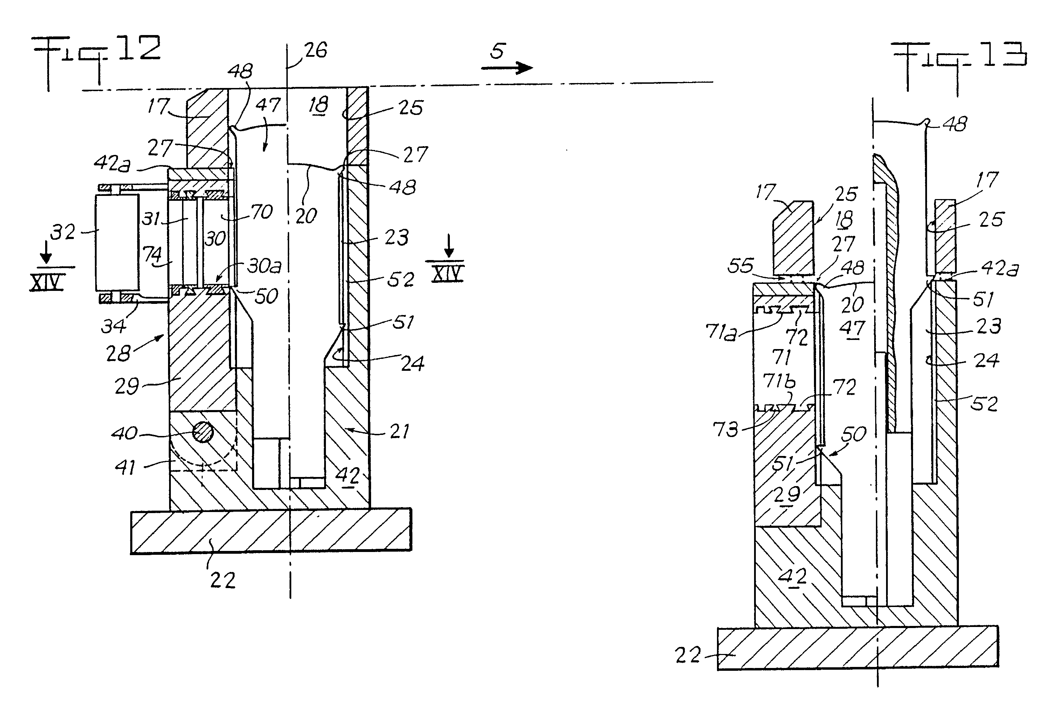

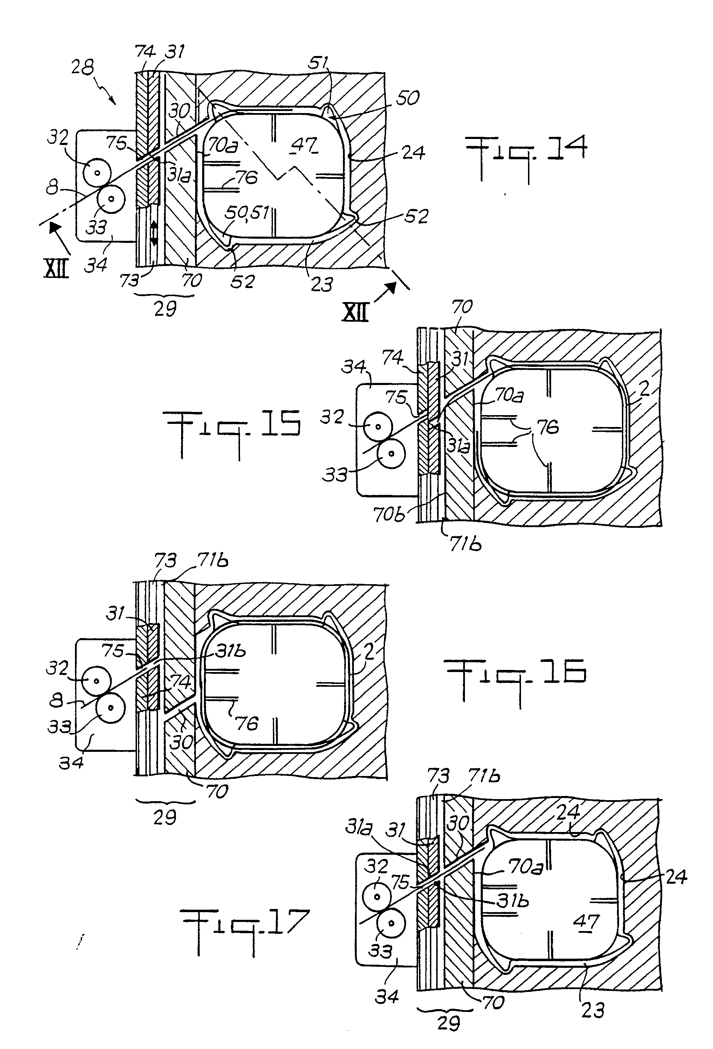

Comme on peut le voir sur les figures 6 et 7, la paire de rouleaux d'introduction comprend un rouleau d'entraînement 32 présentant un grand diamètre et une face périphérique à fort coefficient de friction ainsi qu'un rouleau presseur lisse 33 à faible coefficient de friction et pressant la bande individuelle 8 en permanence contre le rouleau d'entraînement 32 relié à un moteur, par exemple à celui qui assure l'entraînement pas à pas des rouleaux à lames 10, 11 et par suite celui de la bande-mère 7 et des bandes individuelles 8. Comme précédemment mentionné, la longueur de pourtour déroulée du rouleau d'entraînement 32 lors d'un cycle d'avancement est supérieure à la longueur d'un pas d'avance des bandes individuelles 8, mais la pression exercée par les rouleaux 32, 33 sur la bande individuelle 8 est réglée de façon telle qu'ils patinent sur ladite bande dès que l'avance de celle-ci est interrompue par les rouleaux à lames 10, 11. Le rouleau d'entraînement 32 est monté sur la plaque-support 29 de l'unité d'introduction et de découpe 28 par exemple par l'intermédiaire de deux bras rigides de support 34 tandis que le rouleau presseur 33 est monté sur ladite plaque-support 29 par l'intermédiaire d'un ressort à lame courbe 35 qui est disposé de chant de façon à entourer partiellement le rouleau d'entraînement 32 et former avec une partie de la périphérie de celui-ci une sorte d'entonnoir de guidage pour l'extrémité de la bande individuelle 8, entonnoir se rétrécissant en direction de son extrémité frontale (pris dans le sens d'avancement de la bande individuelle 8) où ledit ressort à lame courbe 35 porte les extrémités du rouleau presseur 33 et sollicite ce dernier contre le rouleau d'entraînement 32. La partie extrême frontale du ressort à lame courbe 35 est découpée de façon à présenter une échancrure en U couché dont la branche tranversale est parallèle à l'axe du rouleau presseur 33 et dont les branches latérales s'étendent vers l'arrière et parallèlement au sens de défilement de la bande individuelle. En raison de cette échancrure en U couché, la partie extrême frontale du ressort 35 comporte, d'une part, deux languettes horizontales de support 36 qui, par leur extrémité libre, enserrent les bagues de support inférieure et supérieure 37 du rouleau presseur 33 et, d'autre part, entre les deux languettes 36 et le rouleau presseur 33, une lamelle de guidage 38 dont l'extrémité libre se rapproche très près de la zone de contact entre les deux rouleaux d'introduction 32, 33. L'extrémité arrière du ressort à lame verticale courbe 35 est fixée sur un bras de prolongement 39 faisant saillie de la plaque-support 29 dont il est solidaire. Le ressort à lame 35 fait office de paroi de guidage au moment de l'enfilement d'une nouvelle bande individuelle 8 entre les rouleaux d'introduction 32, 33 et de là, vers la fente d'accès 30. Il est à noter que, grâce à l'emploi d'un rouleau de grand diamètre 32 et un rouleau de faible diamètre 33, la zone de contact entre les rouleaux de la paire de rouleaux 32, 33 peut être disposée très près de la fente d'accès 30. A son extrémité inférieure située en dessous de la chambre de préenroulement 23, la plaque-support 29 est articulée sur un axe horizontal 40 monté dans des paliers 41 du corps 42 de l'unité de préenroulement 21.

Ainsi, l'unité d'introduction et de découpe 28 peut être basculée dans le sens contraire des aiguilles d'une montre (suivant la représentation des figures 3 à 6, 12 et 13) pour rendre accessible la chambre de préenroulement 23 sur sa partie normalement recouverte par la plaque-support 29. Le couteau 31 coopérant avec un bord intérieur de la fente d'accès 30 pour la découpe d'une banderole 2 est constitué par une lame fine allongée verticalement et disposée dans un intervalle étroit 43 entre la face intérieure de la plaque-support 29 et une face verticale extérieure 44 du corps 42 de l'unité de préenroulement 21 de façon à pouvoir pénétrer dans la chambre de préenroulement 23 et passer devant les bords intérieurs de la fente d'accès 30. Pour faciliter une découpe correcte de la banderole 2, la lame 31 est articulée, près de son extrémité supérieure, sur la plaque-support 29 à l'aide d'un pivot horizontal 45 perpendiculaire à la lame 31 et à la face intérieure verticale plane de ladite plaque-support 29 dans laquelle est noyé sur trois de ses faces un bâton d'aimant permanent 46 qui maintient le couteau 31 appliqué contre les bords intérieurs de la fente d'accès 30.

Le dispositif de préformage et de transfert 1 d'une banderole 2 comprend, en outre, un organe conformateur 47 de forme tubulaire (figures 3 à 6, 8 et 9) ou cylindrique (figures 12 à 17) qui comprend à son extrémité supérieure un certain nombre de doigts applicateurs 48 qui s'étendent radialement vers l'extérieur de façon à laisser subsister entre leur sommet et la paroi verticale 25 de la chambre de formage 18 un intervalle dont la largeur est comprise entre une à cinq fois l'épaisseur de la banderole 2. Selon un premier mode de réalisation représenté sur les figures 3 à 6, 8 et 9, l'organe conformateur 47 est essentiellement constitué par une tige creuse ou tubulaire 49 qui porte à son extrémité supérieure les doigts applicateurs 48 et qui est monté verticalement mobile dans la chambre de formage 18 et la chambre de préenroulement 23 et qui coiffe sans jeu latéral notable l'élément de fond 20 qui cependant pourrait, le cas échéant, être réalisé d'une seule pièce avec l'organe conformateur 47 (voir figures 12 à 17). La face extérieure latérale de la tige tubulaire 49 ou du conformateur 47 fait d'une seule pièce avec l'élément de fond 20, présente une forme homothétique à celle de la paroi verticale 25 de la chambre de formage 18 et à celle de la paroi verticale 24 de la chambre de préenroulement 23 et délimite avec ladite paroi verticale 24 une chambre annulaire de guidage et de préenroulement dont la largeur radiale est comprise entre deux à cinq fois l'épaisseur d'une banderole 2. Grâce à cette faible largeur radiale, la banderole 2 est efficacement guidée dans la chambre 23 et prend une forme enroulée qui est déjà très proche de la forme et de la dimension radiale de la chambre de formage 18 dans laquelle elle se détendra radialement et restera appliquée contre la paroi verticale 25 de celle-ci. L'extrémité supérieure du conformateur 47 constitue, selon le premier mode de réalisation représenté sur les figures 3 à 6, 8 et 9, une partie du fond de la chambre de formage 18, et, selon le deuxième mode de réalisation (figures 12, 13) tout le fond de ladite chambre 18 lorsqu'elle est abaissée au niveau de l'épaulement annulaire de retenue 27 en position de thermoformage. Les doigts applicateurs 48 peuvent d'ailleurs être escamotés dans des logements de l'épaulement annulaire de retenue 27 de la paroi verticale 24 délimitant la chambre de guidage et de préenroulement 23.

Le dispositif de préformage et de transfert 1 d'une banderole 2 comprend, par ailleurs, un organe de transfert 50 qui est prévu dans la chambre annulaire de guidage et de préenroulement 23 et supporte le bord longitudinal inférieur de la banderole 2 jusqu'à ce que celle-ci ait été transférée à la chambre de formage 18 par un mouvement relatif entre l'organe de transfert 50 et ladite chambre de formage 18. Dans le cas présent, l'organe de transfert 50 comprend plusieurs taquets radiaux d'entraînement 51 disposés dans la chambre annulaire 23 à l'aplomb des doigts applicateurs 48 et s'étendant radialement à partir de la face verticale extérieure du conformateur 47 dont ils sont solidaires, au-delà du sommet des doigts applicateurs correspondants 48, de telle façon que leur pointe libre se situe à l'extérieur du pourtour délimité par la paroi latérale 25 de la chambre de formage.

L'organe de transfert 50, c'est-à-dire les taquets d'entraînement 51, est solidaire de la tige tubulaire 49 ou du corps plein cylindrique du conformateur 47. La distance verticale entre l'extrémité supérieure et plus précisément dit, un doigt applicateur 48 du conformateur 47 et le taquet d'entraînement correspondant 51 est, d'une part, au moins égale à la distance axiale verticale entre le fond 30a de la fente d'accès 30 et la partie centrale de la chambre de formage 18, et d'autre part, inférieure à la distance entre l'extrémité supérieure de la chambre de formage 18 en position de thermoformage (figures 3 et 12) et l'extrémité inférieure de ladite chambre de formage 18 en position de démoulage (figures 4 et 13).

Afin de permettre aux taquets d'entraînement 51 de s'étendre par leur pointe libre au-delà de la projection verticale du pourtour de la paroi 25 de la chambre de formage 18, la paroi verticale 24 de la chambre de guidage et de préenroulement 23 est munie de gorges verticales à section transversale asymétrique 52 qui sont ouvertes vers ladite chambre de guidage 23 et débouchent à la face supérieure horizontale 42a du corps de l'unité de préenroulement 21 contre laquelle repose le bloc de moulage 17. La forme asymétrique de la section transversale de chaque gorge 52 tient compte de la direction de défilement de l'extrémité frontale de la bande individuelle 8 dans la chambre de guidage 23. Pour cette raison, le flanc de gorge situé en aval de la partie centrale de la gorge 52 présente une inclinaison relativement faible par rapport à la paroi 24 de la chambre 23, tandis que le flanc de gorge amont de ladite gorge 52 est fortement incliné, par exemple de l'ordre de 70 à 85° par rapport à la paroi 24 (voir figures 6 et 14 à 17). Grâce à cette conception, l'extrémité frontale de la bande individuelle 8 ne risque pas de se bloquer dans une gorge de guidage 52 lors de son introduction dans la chambre 23.

En vue d'assurer un bon transfert de la banderole 2 de la chambre de guidage et de préenroulement 23 à la chambre de formage 18 où elle sera retenue par l'épaulement annulaire 27, le bloc de moulage 17 est écarté élastiquement de la face supérieure 42a du corps 42 de l'unité de préenroulement 21 d'une distance de l'ordre de quelques millimètres, par exemple 3 mm, et la position de fin de course ascendante des taquets d'entraînement 51 dépasse de quelques millimètres, par exemple de 2 mm, de la face supérieure 42a de l'unité de préenroulement 21. Ainsi, la face supérieure 51a du taquet 51 contre laquelle repose le bord inférieur longitudinal de la banderole 2 pendant son transfert de la chambre 23 à la chambre de formage 18 peut se placer au-dessus de l'épaulement annulaire 27 (figure 8) et dès que la banderole 2 se trouve entièrement à l'intérieur de la chambre de formage 18, celle-ci se détend radialement en direction de la paroi verticale 25 et est retenue par l'épaulement annulaire 27, lorsque les taquets d'entraînement 51 descendent dans leur position basse (figure 9).

Il est à noter que l'écartement élastique du bloc de moulage 17, du corps 42 de l'unité de préenroulement 21 est limité à quelques millimètres, de sorte qu'il ne gêne en aucune façon la bande thermoplastique 4 lorsque ce bloc 17 occupe la position haute de thermoformage dans laquelle cet écartement est d'ailleurs supprimé dès que le serre-flan du poste de formage s'applique contre la face supérieure de la bande thermoplastique 4 et repousse en même temps le bloc 17 contre le corps 42 de l'unité 21 (figure 9).

Pour réaliser l'écartement élastique vertical entre le bloc de moulage 17 et le corps 42 de l'unité de préenroulement 21, plusieurs tiges filetées verticales dites d'ancrage 53 sont uniformément réparties autour de la chambre de guidage 23 et vissées dans la partie supérieure du corps 42 de l'unité 21. La partie supérieure des tiges d'ancrage 53 pénètre dans un alésage épaulé correspondant 54 ménagé dans le bloc de moulage 17 à partir de sa face inférieure et recevant un ressort hélicoïdal 55 qui s'appuie contre, d'une part, l'épaulement annulaire 56 de l'alésage 54 et, d'autre part, la face supérieure 42a du corps 42 de l'unité 21. L'extrémité supérieure de la tige d'ancrage 53 est taraudée et reçoit l'extrémité inférieure d'une vis de réglage 57 qui traverse un trou de passage 58 coaxial à l'alésage 54 et dont la tête 59 est logée dans un évidement 60 ménagé dans le bloc de moulage 17 à partir de à la face supérieure de celui-ci et dont le fond annulaire 61 sert de contre-butée à la tête de vis 59 dont la position par rapport à la face supérieure 42a du corps 42 détermine l'écartement maximal entre le bloc de moulage 17 et le corps 42 de l'unité de préenroulement 21.

Comme on peut le voir sur les figures 1, 2, 10 et 11, on peut associer à toutes les unités de préenroulement 21 dont chacune correspond à une chambre de formage 18 du bloc de moulage 17, une seule unité de découpe longitudinale 9 de la bande-mère 7 en bandes individuelles. Compte tenu du fait que les bandes individuelles 8 sont découpées longitudinalement lorsque la bande-mère 7 se trouve en position horizontale et que les fentes d'accès 30 dans les unités de préenroulement 21 sont en position verticale, les bandes individuelles 8 doivent être vrillées de 90° à l'aide d'un rouleau de guidage vertical 3a dont la distance D à l'unité de découpe longitudinale 9 est au moins égale à huit fois la largeur de la bande individuelle 8. Ce rouleau de guidage 3a et, le cas échéant, d'autres rouleaux de renvoi 83 prévus sur le trajet de la bande individuelle 8 vers l'unité de préenroulement 21 sont fixés directement ou indirectement sur le plateau de support 22 sur lequel reposent le bloc de moulage 17, les unités de préenroulement 21 et les unités d'introduction et de découpe 28. Il est à noter qu'au moins l'un des rouleaux de renvoi 83 est à position réglable perpendiculairement à son axe vertical.

La montée et la baisse simultanées verticales des plateaux de support 12 et 22 du dispositif de préformage et de transfert 1 selon les figures 1 et 2 servent à éviter tout allongement du trajet d'une bande individuelle 8 entre l'unité de découpe longitudinale 9 et son unité de préenroulement correspondante 21. Cette montée ou baisse verticale simultanée est assurée par un guidage vertical des deux plateaux 12 et 22 et par plusieurs excentriques 84, 85, 86 de même taille et position angulaire, agissant sur des galets 87, 88, 89 prévus sur les deux plateaux 12 et 22 et entraînés de façon synchrone à l'aide d'un mécanisme à roues dentées 90, 91, 92, 93 et à chaînes 94, 95 de sorte que les deux plateaux 12 et 22 effectuent toujours simultanément la même course ascendante ou descendante.

Le mode de transfert d'une banderole 2 l'aide du dispositif de préformage et de transfert 1 est schématiquement représenté sur les figures 3 à 5, 12 et 13, étant entendu que le côté gauche et le côté droit de chacune des figures 3 à 5, 12 et 13 représentent différentes positions soit du bloc de moulage 17, soit du conformateur 47.

Sur les figures 3, 5 (côté droit) et 12, le bloc de moulage 17 est en position de thermoformage et appliqué par un serre-flan non représenté contre le corps 42 de l'unité de préenroulement 21 reposant sur le plateau de support 22. L'extrémité supérieure et les doigts 48 du conformateur 47 se trouvent alors à mi-hauteur de la chambre de formage 18 et les taquets d'entraînement 51 sont placés au même niveau que le fond de la fente d'accès 30 (côté gauche des figures 3 et 12) de sorte que l'introduction de la bande individuelle 8 dans la chambre de préenroulement 23 peut débuter déjà pendant le thermoformage d'un récipient et continuer jusqu'à la fin de cette opération de thermoformage pendant laquelle le conformateur 47 descend au même niveau que l'épaulement annulaire 27 et ses doigts 48 s'escamotent dans le corps 42 de l'unité 21 (côté droit des figures 3 et 12).

Ensuite, le bloc de moulage 17 et l'unité de préenroulement 21 descendent avec le conformateur 47 dans la position de démoulage (figures 4 et 13, côté gauche), dans laquelle le récipient préalablement thermoformé et faisant encore corps avec la bande thermoplastique 4 peut être évacué du trajet vertical du bloc de moulage 17 par avancement d'un pas dans le sens de la flèche 5. On remarquera que le bloc de moulage 17 se soulève légèrement par rapport à l'unité 21 dès qu'il n'est plus sollicité vers le bas par le serre-flan non représenté qui restera au-dessus du trajet de la bande thermoplastique 4. Pendant le passage de la position de thermoformage à la position de démoulage (figures 4 et 13, côté gauche) l'introduction de la bande individuelle 8 dans la chambre 23 peut continuer. Après découpe de cette bande 8 en banderole 2, le conformateur 47 remonte dans sa position supérieure dans laquelle le taquet d'entraînement 51 de l'organe de transfert 50 dépasse légèrement de la face supérieure 42a et de l'épaulement annulaire 27 de l'unité de préenroulement 21 (figures 4 et 13, côté droit, et figure 8) et dans laquelle la banderole 2 est transférée à la chambre de formage 18.

Pendant la remontée du bloc de moulage 17 et de l'unité 21 en position de thermoformage, la banderole 2 est retenue par l'épaulement annulaire 27 et se déplace vers le haut par rapport au conformateur 47 qui est alors immobilisé. Pendant la remontée du bloc de moulage 17, la chambre de préenroulement 23 n'est pas accessible à la bande individuelle 8 en attente dans la fente d'accès 30 (figure 5, côté gauche) ou à un autre endroit qui sera précisé ci-après.

Dès que le bloc de moulage 17 et l'unité de préenroulement 21 ont atteint leur position haute de thermoformage (figure 5, côté droit ; figures 3 et 12, côté gauche ; figure 9), la position du conformateur 47 restant inchangée jusqu'au début de l'opération de thermoformage, peut commencer un nouveau cycle d'introduction de la bande individuelle 8 et de sa découpe transversale en banderole 2 dans la chambre de préenroulement 23 de l'unité 21 (figures 3 et 12, côté gauche).

L'invention englobe aussi un mode de réalisation du dispositif de préformage et de transfert 1 dans lequel le plateau de support 12 de l'unité de découpe longitudinale 9 de la bande-mère 7 en bandes individuelles 8 n'est pas exclusivement mobile dans le sens vertical, mais exécute un mouvement complexe pour suivre de façon synchrone les mouvements ascendants et descendants du plateau de support 22 et du bloc de moulage 17 et des unités 21 et 28 supportés par ledit plateau 22, dans le but de maintenir constante la distance D entre, d'une part, un premier rouleau ou cylindre de renvoi 3a qui suit exactement les mouvements verticaux du plateau 22, et, d'autre part, l'unité de découpe longitudinale 9.

Dans ce cas, le plateau de support 12 du dispositif de découpe longitudinale 9 présente, par exemple, la forme d'une fourche comportant une branche transversale 12a et deux branches latérales 12b dont la branche transversale 12a s'étend parallèlement au trajet (flèche 5) de la bande 4 et est articulée, par son extrémité aval, en face ou légèrement à côté d'une extrémité latérale du bloc de moulage 17, sur un axe horizontal 64 également parallèle au trajet (flèche 5) de ladite bande thermoplastique 4 et porté à l'aide de deux paliers 65 par le plateau de support 22 du bloc de moulage 17 et des unités 21 et 28, ledit axe 64 étant perpendiculaire au plan passant par une face verticale transversale du bloc de moulage 17.

La face supérieure de la branche transversale ou extrémité aval 12a de la fourche (ou plateau) de support 12 est munie, pour chacune des unités d'introduction et de découpe transversale 28 d'une banderole 2, d'un premier rouleau de renvoi 3a. Comme on peut le voir sur les figures 10 et 11, tous les premiers rouleaux de renvoi 3a sont disposés perpendiculairement à la face supérieure de la branche transversale 12a de la fourche de support 12 et l'une derrière l'autre suivant une rangée parallèle à l'axe d'articulation 64 et au-dessus de celui-ci. L'articulation horizontale 64 de l'extrémité aval ou branche transversale 12a se trouve à une distance verticale du plateau de support 22 telle que les premiers rouleaux ou cylindres de renvoi 3a se trouvent dans la même zone de niveau ou hauteur que les unités d'introduction et de découpe 28. Les premiers rouleaux de renvoi 3a sont écartés de la face frontale du bloc de moulage 17 et les uns des autres de façon à éviter tout contact entre deux bandes individuelles 8 sur leur trajet compris entre les premiers rouleaux de renvoi 3a et les unités d'introduction et de découpe 28. A la distance D des premiers rouleaux de renvoi 3a, distance D qui d'une façon avantageuse est au moins égale à huit fois la largeur des bandes individuelles 8, les branches latérales 12b de la fourche de support 12 présentant des flasques à paliers 13 dans lesquels sont logés les embouts des arbres de rotation 10a et 11a des rouleaux à lames 10, 11 du dispositif de découpe longitudinale 9 ainsi que d'un arbre 67a d'un rouleau de renvoi 67.

L'extrémité libre amont du plateau de support 12, c'est-à-dire des branches latérales 12b de la fourche de support 12 est conformée en chape 12c qui est ouverte vers l'extrémité amont de la fourche et qui coiffe un axe de support fixe 68 parallèle à l'axe d'articulation 64 de l'extrémité aval, c'est-à-dire de la branche transversale 12a de la fourche (ou plateau) de support 12 et porté par deux paliers fixes 69. Cet axe de support fixe 68 est très rapproché du dispositif de découpe longitudinale 9 tout en se trouvant à une distance de l'axe 64 supérieure à la distance D et est prévu dans un plan P sensiblement horizontal dans lequel se trouve aussi l'axe d'articulation 64 dans sa position médiane entre ses deux positions extrêmes haute et basse (voir positions en traits interrompus sur la figure 11), les axes des premiers rouleaux de renvoi 3a étant alors situés dans un plan vertical V parallèle aux sens de déplacement du plateau de support 22.

On comprend aisément que lorsque l'axe d'articulation 64 se déplace verticalement dans le plan V avec le plateau de support 22, le bloc de moulage 17 et les unités 21 et 28, l'extrémité aval, c'est-à-dire la branche transversale 12a de la fourche de support suit ce mouvement en pivotant autour de l'axe de support fixe 68 et en exécutant une faible translation parallèlement l'extension longitudinale de la fourche de support 12 pour compenser les faibles variations de distance entre l'axe d'articulation 64 solidaire du plateau de support 22 verticalement mobile et l'axe de support fixe 68, variations de distance qui se produisent chaque fois que le plateau 22 passe d'une position extrême à l'autre qui correspondent comme précédemment mentionné à la position haute de thermoformage et la position basse de démoulage du bloc de moulage 17. Dans ces positions extrêmes haute et basse, les axes des premiers rouleaux de renvoi 3a sont faiblement inclinés par rapport au plan vertical V, mais cette inclinaison faible est si insignifiante qu'elle ne modifie pas la longueur de trajet de chaque bande individuelle 8 entre le dispositif de découpe longitudinale 9 et les rouleaux d'introduction 32, 33 de l'unité d'introduction et de découpe 28.

Il est à noter que pendant ces mouvements, la distance D entre un premier rouleau de renvoi 3a et le dispositif de découpe longitudinale 9 reste constante et les variations de tensions dues aux faibles variations de longueur du tronçon de bande-mère 7 entre le rouleau de support 6 et le dispositif 9 qui se déplace légèrement en translation et en pivotement autour de l'axe 68 sont corrigées et compensées par les mouvements de pivotement correspondants du rouleau danseur 15.

Sur les figures 12 à 17 est représenté un autre mode de réalisation de l'unité d'introduction et de découpe 28, selon lequel la plaque-support 29 comprend au droit de chaque chambre de préenroulement 23 de l'unité de préenroulement 21, une plaquette verticale 70 logée dans une ouverture 71 de la plaque-support 29 et coulissant horizontalement dans des glissières horizontales 72 prévues dans les faces horizontales supérieure 71a et inférieure 71b de l'ouverture de passage 71, la face intérieure verticale 70a de ladite plaquette 70 constituant en même temps une partie de la paroi latérale 24 de la chambre de préenroulement. Dans cette plaquette verticale 70 est ménagée verticalement la fente d'accès 30 qui, pour l'une de ses positions extrêmes, débouche tangentiellement dans la chambre de préenroulement 23 (figures 14, 15 et 17). Au voisinage de la face extérieure 70b de la plaquette coulissante 70 est prévu, dans l'ouverture 71 de la plaque-support 29, le couteau ou lame 31 qui est mobile horizontalement et guidé dans des glissières 73 ménagées dans les faces horizontales supérieure 71a et inférieure 71b de l'ouverture 71, parallèlement à la plaquette coulissante 70. L'arête coupante 31a du couteau 31 est avantageusement constituée par l'un des bords extérieurs d'une fente de passage 31b ménagée dans le corps du couteau 31 de façon à se trouver en alignement avec la fente d'accès 30 lorsque le couteau 31 et la plaquette coulissante 70 occupent leur position extrême de départ (figures 14 et 17).

La face extérieure verticale du couteau mobile 31 est appliquée en permanence contre une contre-lame verticale fixe 74 disposée également dans l'ouverture de passage 71 et ancrée dans les faces horizontales supérieure 71a et inférieure 71b de ladite ouverture 71. Cette contre-lame fixe 74 comprend une fente verticale de guidage 75 qui est alignée avec la fente d'accès 30 de la plaquette coulissante 70 et, si elle existe, avec la fente de passage 31b du couteau 31 lorsque celui-ci et ladite plaquette 70 occupent leur position extrême de départ (figures 14 et 17).

Devant chaque fente de guidage 75 de contre-lame fixe 74 est prévue une paire de rouleaux d'introduction 32, 33 entre lesquels est pincée une bande individuelle 8, les axes de ces rouleaux verticaux 32, 33 étant portés par des bras de support 34 ou tout autre moyen approprié, solidaires de la plaque-support 29 qui, comme dans l'exemple précédent, est articulée sur l'axe horizontal 40 monté dans les paliers 41 du corps 42 de l'unité de préenroulement 21.

Comme dans l'exemple précédent, la face latérale verticale du conformateur 47 délimite avec la paroi latérale 24 la chambre annulaire de préenroulement et de guidage 23 dans laquelle est poussée par les rouleaux d'introduction 32, 33 l'extrémité libre de la bande individuelle 8, lorsque toutes les fentes 30, 31b et 75 respectivement de la plaquette 70, du couteau 30 et de la contre-lame fixe 74 sont alignées (figure 17). Lorsque les rouleaux 32, 33 ont débité une longueur de bande individuelle 8 correspondant à la longueur d'une banderole 2, l'introduction dans la chambre 23 de la bande individuelle est interrompue. A cet instant, l'extrémité libre de la bande individuelle 8 se trouve environ à mi-longueur ou largeur de la chambre de préenroulement 23 à côté de la plaquette coulissante 70 (figure 15) et peut alors être plaquée contre la paroi latérale du conformateur 47 sous l'action d'une dépression produite au droit des canaux d'aspiration et de soufflage 76 ménagés dans le corps du conformateur 47, au moins en face de la plaquette coulissante 70.

On découpe alors une banderole 2 de la bande individuelle 8 à l'aide du couteau 31 et de la contre-lame 74, la nouvelle extrémité libre de la bande individuelle 8 restant engagée dans la fente de guidage 75 de ladite contre-lame 74 (figure 15).

C'est alors que la plaquette coulissante 70 se déplace le long de la chambre de préenroulement 23 jusqu'à ce que l'extrémité arrière de la banderole 2 se soit échappée de sa fente d'accès 30 et ait été introduite dans ladite chambre 23 où elle est appliquée également contre la paroi latérale du conformateur 47 (figure 16). La plaquette coulissante 70 peut alors revenir dans sa position extrême de départ où sa fente 30 sera à nouveau alignée avec celle du couteau 31 également revenu en position extrême de départ, et la fente fixe 75 de la contre-lame 74. Un nouveau cycle d'introduction et de découpe d'une banderole 2 peut alors commencer (figure 17). Entretemps l'aspiration d'air travers les canaux 76 a été interrompue et la banderole 2 a pu être transférée de la chambre de formage 18 comme dans l'exemple précédemment décrit.

Les modes de réalisation précédemment décrits peuvent subir un certain nombre de modifications sans que l'on sorte pour cela du cadre de protection défini par les revendications annexées.

## Revendications

1. Dispositif de préformage et de transfert (1) d'une banderole (2) dans une installation de thermoformage de récipients qui comprend un bloc de moulage (17) muni d'une pluralité de chambres cylindriques verticales de formage (18), ouvertes vers le haut et présentant à leur extrémité inférieure une ouverture (19) susceptible d'être fermée par un élément de fond (20) mobile par rapport au bloc de moulage (17) de façon à être coiffé par la chambre de formage correspondante (18) mobile avec le bloc de moulage (17) entre une position haute dite de thermoformage et une position basse dite de démoulage des récipients, dispositif du type comprenant :

   - une pluralité de bandes individuelles (8) d'un nombre égal à celui des chambres de formage (18) prévues dans le bloc de moulage (17), bandes individuelles (8) desquelles sont découpées transversalement des banderoles (2),
   - au moins un rouleau de guidage (83) à position réglable pour chacune des bandes individuelles (8),
   - une unité de préenroulement (21) des banderoles (2) disposée en dessous du bloc de moulage (17) qui repose sur celle-ci, montée sur un plateau de support (22) mobile verticalement entre une position correspondant à la position de thermoformage et une position correspondant à la position de démoulage du bloc de moulage (17), et qui comprend une pluralité de chambres cylindriques verticales de préenroulement (23) alignées chacune avec une des chambres de formage (18), de façon à constituer, par son bord supérieur, un épaulement annulaire de retenue (27) qui délimite en même temps l'ouverture de fond (19) de la chambre de formage (18),
   - une unité d'introduction et de découpe (28) d'une banderole (2), par chambre de préenroulement (23) dont une partie de la paroi latérale verticale comprend une fente verticale d'accès (30) débouchant obliquement dans la chambre de préenroulement (23), un couteau (31) susceptible de coopérer avec une contre-lame (74) pour découper l'extrémité arrière de la banderole (2) introduite au moins partiellement dans la chambre de préenroulement (23), et une paire de rouleaux d'introduction (32, 33) disposée en amont du couteau (31) et de la fente et susceptible d'entraîner la bande individuelle (8) pincée entre ces deux rouleaux (32, 33) d'un pas égal à la longueur d'une banderole (2),
   - un organe conformateur (47) dont la tige (49) traverse la chambre de préenroulement (23) et dont la partie supérieure, d'une part, constitue au moins une partie de la plaque de fond (20) et présente une section transversale de forme analogue mais inférieure à celle de la paroi verticale (25) de la chambre de formage (18) de sorte que la distance entre la paroi verticale (25) de la chambre de formage (18) et la face périphérique de l'extrémité supérieure (48) du conformateur (47) soit au moins égale à l'épaisseur d'une banderole (2) et, d'autre part, est susceptible de pénétrer dans la chambre de formage (18), et
   - un organe de transfert (50) prévu dans la chambre annulaire de guidage et de préenrculement (23), solidaire dudit organe conformateur (47) et susceptible de supporter la banderole (2) jusqu'à ce que celle-ci ait été transférée à la chambre de formage (18) par un mouvement relatif entre ledit organe de transfert (50) et ladite chambre de formage (18),

   caractérisé en ce qu'il comporte, en outre,
   - un rouleau de support de bande-mère (6), monté dans des paliers à poste fixe, et
   - une unité de découpe longitudinale (9) de la bande-mère (7) en bandes individuelles (8), montée sur un plateau de support (12) écarté latéralement du bloc de moulage (17), et en ce que
   - la tige (49) de l'organe conformateur (47) forme avec la paroi verticale (24) de la chambre de préenroulement (23) une chambre annulaire étroite de guidage,
   - la distance entre l'extrémité supérieure du conformateur (47) et l'organe de transfert (50) est, d'une part, au moins égale à la distance axiale entre le fond (30a) de la fente d'accès (30) et la partie centrale de la chambre de formage (18) et, d'autre part, inférieure à la distance entre l'extrémité supérieure de la chambre de formage (18) en position de thermoformage et l'extrémité inférieure de ladite chambre de formage en position de démoulage ;

- l'ensemble des éléments constitutifs (29 à 34 et 70 à 75) de l'unité d'introduction et de découpage (28) d'une banderole (2), d'une part, est rendu solidaire de l'unité de préenroulement (21) à l'aide d'une plaque-support (29) dans laquelle est ménagée ladite fente d'accès (30) et dont la face intérieure forme une partie de la paroi latérale verticale de la chambre de préenroulement (23), et, d'autre part, à l'exception du couteau (31) et de la contre-lame (71), est installée en permanence devant ladite fente d'accès (30) à ladite chambre de préenroulement (23) ;
- le plateau de support (12) de l'unité de découpe longitudinale (9) de la bande-mère (7) en bandes individuelles (8) est monté mobile verticalement en synchronisme avec les mouvements de courses verticales du plateau de support (22) de l'unité de préenroulement (21) et du bloc de moulage (17) ; et
- un rouleau de tension (15) est prévu sur le trajet de la bande-mère (7) entre son rouleau de support (6) et l'unité de découpe longitudinale (9), ce rouleau de tension (15) étant appliqué contre la bande-mère (7) de façon à compenser les variations de longueur du tronçon de bande-mère déroulée, dues aux déplacements verticaux de l'unité de préenroulement (21) des banderoles (2).

2. Dispositif selon la revendication 1, caractérisé en ce que la longueur de course verticale du plateau de support (12) de l'unité de découpe longitudinale (9) est identique à celle du plateau de support (22) de l'unité de préenroulement (21).

3. Dispositif selon la revendication 1, caractérisé en ce que l'extrémité aval (12a) du plateau de support (12) est articulée en face ou légèrement à côté d'une extrémité latérale du bloc de moulage (17), sur un axe horizontal (64) perpendiculaire au plan passant par une face verticale transversale du bloc de moulage (17) et porté par le plateau de support (22) dudit bloc de moulage (17), que l'extrémité aval (12a) du plateau de support (12) porte, à sa face supérieure, tous les premiers rouleaux de renvoi 3a des bandes individuelles (8) disposés suivant une rangée parallèle à l'axe d'articulation au-dessus de celui-ci dans la même zône de niveau ou hauteur que les unités d'introduction et de découpe correspondantes (28) et que l'extrémité amont du plateau de support (12) est conformée en chape (12c) qui est ouverte vers l'amont et qui coiffe un axe de support fixe (68), parallèle à l'axe d'articulation (64) de l'extrémité aval (12a) dudit plateau (12) et très rapproché du dispositif de découpe longitudinale (9) porté par ledit plateau (12).

4. Dispositif selon la revendication 1, caractérisé en ce que la paroi verticale (24) de la chambre de préenroulement (23) délimite un pourtour homothétique à celui de la paroi verticale (25) de la chambre de formage (18) mais légèrement inférieur au pourtour de celle-ci de façon à constituer, par son bord supérieur, un épaulement annulaire de retenue (27) qui délimite en même temps l'ouverture de fond (19) de la chambre de formage.

5. Dispositif selon la revendication 1, caractérisé en ce que le couteau (31) de l'unité d'introduction et de découpe (28) est associé à la face intérieure de la plaque-support (29) et est susceptible de coopérer avec l'un des bords intérieurs de la fente d'accès (30) pour découper l'extrémité arrière de la banderole (2) qui au préalable a été complètement introduite dans la chambre de préenroulement (23), et, que chaque paire de rouleaux d'introduction (32, 33) disposée devant l'entrée évasée d'une fente d'accès (30) correspondante comporte au moins un rouleau monté dans des paliers solidaires de la plaque-support (29).

6. Dispositif selon la revendication 1, caractérisé en ce que le couteau ou lame (31) est articulé près de son extrémité supérieure, sur la plaque-support (29) à l'aide d'un pivot horizontal (45) perpendiculaire à la lame (31) et à la face intérieure verticale plane de ladite plaque-support (29) dans laquelle est noyé sur trois de ses faces un bâton d'aimant permanent (46) qui maintient le couteau (31) appliqué contre les bords intérieurs de la fente d'accès (30).

7. Dispositif selon la revendication 1, caractérisé en ce que l'unité d'introduction et de découpe transversale (28) comprend, au droit de chaque chambre de préenroulement (23), une plaquette verticale (70) logée dans une ouverture de passage (71) de la plaque-support (29), coulissant horizontalement et constituant par sa face intérieure verticale (70a) une partie de la paroi latérale (24) de ladite chambre de préenroulement (23), que la fente d'accès (30) est ménagée dans cette plaquette verticale (70), que le couteau mobile (31) est prévu dans l'ouverture de passage (71) à côté de la face extérieure de ladite plaquette (70) et coopère avec une contre-lame fixe (74) également disposée dans l'ouverture de passage (71) et comprenant une fente de guidage (75) qui est alignée avec la fente d'accès (30) lorsque la plaquette (70) occupe sa position extrême de départ, et qu'une paire de rouleaux d'introduction (32, 33) est prévue devant ladite fente de guidage (75) et rendue solidaire de la plaque-support (29).

8. Dispositif selon la revendication 7, caractérisé en ce que le conformateur (47) comporte des canaux d'aspiration et de soufflage (76) au moins en face de la plaquette coulissante (70).

9. Dispositif selon la revendication 1, caractérisé en ce que la paire de rouleaux d'introduction comprend un rouleau d'entraînement (32) présentant un grand diamètre et une face périphérique à fort coefficient de friction ainsi qu'un rouleau presseur lisse (33) présentant un faible diamètre et une face périphérique à faible coefficient de friction et pressant la bande individuelle (8) en permanence contre le rouleau d'entraînement (32).

10. Dispositif selon la revendication 9, caractérisé en en ce que le rouleau presseur (33) est monté sur la plaque-support (29) par l'intermédiaire d'un ressort à lame courbe (35) qui est disposé de chant de façon à entourer partiellement le rouleau d'entraînement (32) et former avec une partie de la périphérie de celui-ci une sorte d'entonnoir de guidage pour l'extrémité de la bande individuelle (8), entonnoir se rétrécissant en direction de son extrémité frontale (pris dans le sens d'avancement de la bande individuelle (8)) où ledit ressort à lame courbe (35) porte les extrémités du rouleau presseur (33) et sollicite ce dernier contre le rouleau d'entraînement (32).

11. Dispositif selon la revendication 10, caractérisé en ce que la partie extrême frontale du ressort (35) comporte deux languettes horizontales de support (36) qui, par leur extrémité libre, enserrent les bagues de support inférieure et supérieure (37) du rouleau presseur (33) et, entre les deux languettes (36) et le rouleau presseur (33), une lamelle de guidage (38) dont l'extrémité libre se rapproche très près de la zone de contact entre les deux rouleaux d'introduction (32, 33).

12. Dispositif selon la revendication 1, caractérisé en ce qu'à son extrémité inférieure située en dessous de la chambre de préenroulement

(23), la plaque-support (29) est articulée sur un axe horizontal (40) monté dans des paliers (41) du corps (42) de l'unité de préenroulement (21).

13. Dispositif selon la revendication 1, caractérisé en ce que l'organe conformateur (47) est constitué par une tige pleine ou tubulaire (49) qui porte à son extrémité supérieure les doigts applicateurs (48) et qui est montée verticalement mobile dans la chambre de formage (18) et la chambre de préenroulement (23) et qui coiffe sans jeu latéral notable l'élément de fond (20).

14. Dispositif selon la revendication 1, caractérisé en ce que la face latérale du conformateur (47) présente une forme homothétique à celle de la paroi verticale (25) de la chambre de formage (18) et à celle de la paroi verticale (24) de la chambre de préenroulement (23) et délimite avec ladite paroi verticale (24) une chambre annulaire de guidage et de préenroulement dont la largeur radiale est comprise entre deux à cinq fois l'épaisseur d'une banderole (2).

15. Dispositif selon l'une des revendications 1 et 13, caractérisé en ce que l'organe de transfert (50) solidaire du conformateur (47) comprend plusieurs taquets radiaux d'entraînement (51) disposés dans la chambre annulaire (23) à l'aplomb des doigts applicateurs (48) et s'étendant radialement à partir de la face verticale extérieure dudit conformateur (47), au-delà du sommet des doigts applicateurs correspondants (48), de telle façon que leur pointe libre se situe à l'extérieur du pourtour délimité par la paroi latérale (25) de la chambre de formage (18).

16. Dispositif selon l'une des revendications 1 et 15, caractérisé en ce que la paroi verticale (24) de la chambre de guidage et de préenroulement (23) est munie de gorges verticales à section transversale asymétrique (52) dans chacune desquelles pénètre un taquet d'entraînement (51) de l'organe de transfert (50) et qui sont ouvertes vers ladite chambre de guidage (23) et débouchent à la face supérieure horizontale (42a) du corps de l'unité de préenroulement (21) contre laquelle repose le bloc de moulage (17).

17. Dispositif selon l'une des revendications 1, 13, 15 et 16, caractérisé en ce que le bloc de moulage (17) est écarté élastiquement de la face supérieure (42a) du corps (42) de l'unité de préenroulement (21) d'une distance de l'ordre de quelques millimètres, et la position de fin de course ascendante des taquets d'entraînement (51) de l'organe de transfert (50) dépasse de quelques millimètres de la face supérieure (42a) de l'unité de préenroulement (21).

18. Dispositif selon la revendication 1, caractérisé en ce que la montée et la baisse simultanées des plateaux de support (12 et 22) servant à éviter tout allongement du trajet d'une bande individuelle (8) entre l'unité de découpe longitudinale (9) et son unité de préenroulement correspondante (21) sont assurées par un guidage vertical des deux plateaux (12, 22) et par plusieurs excentriques (84, 85, 86) de même taille et position angulaire, agissant sur des galets (87, 88, 89) prévus sur les deux plateaux (12, 22) et entraînés de façon synchrone à l'aide d'un mécanisme à roues dentées (90, 91, 92, 93) et à chaînes (94, 95) de sorte que les deux plateaux (12, 22) effectuent toujours simultanément la même course ascendante ou descendante.

19. Dispositif selon la revendication 1 ou 3, caractérisé en ce que les déplacements en translation et en pivotement du plateau de support (12) de l'unité de découpe longitudinale (9) sont commandés par les mouvements verticaux du plateau de support (22).

**Claims**

1. Device (1) for the pre-forming and transfer of a banderole (2) in a container thermoforming installation which comprises a molding unit (17) equipped with a plurality of vertical cylindrical forming chambers (18), open at their top part and having at their lower part an opening (19) adapted to be closed by a bottom element (20) movable with respect to the molding unit (17), in such a way as to be capped over by the corresponding molding chamber (18) which is movable with said molding unit (17) between a high position, called thermoforming position and a low position called container stripping position, device of the type comprising:
   - a plurality of individual bands (8), of a number equal to that of the molding chambers (18) provided in the molding unit (17), individual bands (8) from which banderoles (2) are cut crosswise,
   - at least one guiding roller (83) of adjustable position for every individual band (8),
   - a pre-winding unit (21) for pre-winding the banderoles (2), which unit is placed under the molding unit (17) which rests on it, and is mounted on a supporting table (22) which is vertically movable between a position corresponding to the thermoforming position and a position corresponding to the stripping position of the molding unit (17), said pre-winding unit comprising a plurality of vertical cylindrical pre-winding chambers (23), each one in alignment with one of the forming chambers (18), so as to constitute with its upper edge, an annular holding shoulder member (27) which also defines the bottom opening (19) of the forming chamber (18),
   - a banderole (2) introduction and cutting unit (28) for every pre-winding chamber (23), of which part of the vertical side wall comprises a vertical access slot (30) issuing obliquely into the pre-winding chamber (23), a cutter (31) adapted to cooperate with a counter-blade (74) for cutting the back end of the banderole (2) introduced at least partly into the pre-winding chamber (23), and one pair of introduction rollers (32, 33) placed upstream of the cutter (31) and of said slot and adapted to drive the individual band (8), which band is pinched between said two rollers (32, 33) at a pace equal to the length of one banderole (2),
   - a shaping member (47) comprising a rod (49) which traverses the pre-winding chamber (23) and of which the upper part, on the one hand, constitutes at least part of the bottom plate (20), and has a cross-section of similar but smaller shape than that of the vertical wall (25) of the forming chamber (18), so that the distance between the vertical wall (25) of the forming chamber (18) and the peripheral face of the upper end (48) of the shaping member (47) is at least equal to the thickness of a banderole (2), and on the other hand, is adapted to penetrate into the forming chamber (18), and
   - a transfer means (50) provided in the annular pre-winding and guiding chamber (23), fast with said shaping member (47) and adapted to support said banderole (2) until the same has been transferred to the forming chamber (18) by a relative movement between said transfer means (50) and said forming chamber (18), device characterized in that it comprises in addition:
   - a master-band supporting roller (6), mounted in fixed bearings, and

- a cutting unit (9) for cutting the master-band (7) longitudinally into individual bands (8), which unit is mounted on a supporting table (12) remote laterally from the molding unit (17), and in that
- the rod (49) of the shaping member (47) forms with the vertical wall (24) of the pre-winding chamber (23) a narrow annular guiding chamber,
- the distance between the upper end of the shaping member (47) and the transfer member (50) is, on the one hand, at least equal to the axial distance between the bottom (30a) of the access slot (30) and the central part of the forming chamber (18) and, on the other hand, less than the distance between the upper end of the forming chamber (18) in thermoforming position and the lower end of said forming chamber in stripping position;
- the assembly of the elements constituting (29 to 34 and 70 to 75) the banderole (2) introduction and cutting unit (28) is, on the one hand, joined to the pre-winding unit (21) by means of a support-plate (29) in which said access slot (30) is provided and of which the inner face forms part of the vertical side wall of the pre-winding chamber (23) and, on the other hand, except for the cutter (31) and the counter-blade (71) is permanently installed in front of said access slot (30) of said pre-winding chamber (23);
- the supporting table (12) of the unit (9) for longitudinally cutting the master-band (7) into individual bands (8) is mounted for vertically moving synchronous with the vertical stroke displacements of the supporting table (22) of the pre-winding unit (21) and the molding unit (17), and
- a tension roller (15) is provided on the path of the master-band (7) between its supporting roller (6) and the longitudinal cutting unit (9), said tension roller (15) being applied against the master-band (7) so as to compensate the length variations of the unrolled portion of the master-band which are due to the vertical displacement of the banderole (2) pre-winding unit (21).

2. Device according to claim 1, characterized in that the length of the vertical stroke of the supporting table (12) of the longitudinal cutting unit (9) is identical to that of the supporting table (22) of the pre-winding unit (21).

3. Device according to claim 1, characterized in that the downstream end (12a) of the supporting table (12) is articulated opposite or slightly aside of a lateral end of the molding unit (17), on a horizontal axis (64) perpendicular to the plane including a transverse vertical face of the molding unit (17) and borne by the supporting table (22) of the said molding unit (17), in that said downstream end (12a) of the supporting table (12) carries at its upper face, all the first return rollers (3a) of the individual bands (8) which are placed in a row parallel to the articulation axis and above same inside the same zone of level or height as the corresponding introduction and cutting units (28), and in that the upstream end of said supporting table (12) is yoke-shaped (12c), the yoke being open in upstream direction and topping a fixed support spindle (68), parallel to the pivoting axis (64) of the downstream end (12a) of said table (12) and very close to the longitudinal cutting device (9) borne by said table (12).

4. Device according to claim 1, characterized in that the vertical wall (24) of the pre-winding chamber (23) defines an outline which is homothetic to that of the vertical wall (25) of the forming chamber (18) but slightly smaller than the outline thereof so as to constitute, by its upper edge, an annular holding shoulder member (27) which, at the same time, defines the bottom opening (19) of said forming chamber.

5. Device according to claim 1, characterized in that the cutter (31) of the introduction and cutting unit (28) is associated with the inner face of the support-plate (29), and is adapted to cooperate with one of the inside edges of the access slot (30) in order to cut the rear end of the banderole (2) which has beforehand been entirely introduced in the pre-winding chamber (23), and, in that each pair of introduction rollers (32, 33) placed in front of the widening-out entrance of a corresponding access slot (30) comprises at least one roller which is mounted in bearings fast with the support-plate (30).

6. Device according to claim 1, characterized in that the cutter or blade (31) is articulated close to its upper end, on said support-plate (29) by means of a horizontal pivot (45) perpendicular to the blade (31) and to the flat vertical inner face of said support-plate (29) in which is embedded, by three of its faces, a permanent magnet bar (46) which holds the cutter (31) applied against the inner edges of said access slot (30).

7. Device according to claim 1, characterized in that the introduction and transversal cutting unit (28) comprises, vertically to each pre-winding chamber (23), a vertical pad (70) housed in a passage opening (71) provided in said support-plate (29), said vertical pad is horizontally slidable and constitutes by its vertical inner face (70a) a part of the side wall (24) of said pre-winding chamber (23), in that the access slot (30) is provided in said vertical plate (70), in that the movable cutter (31) is provided in said passage opening (71) next to the outer face of said plate (70) and cooperates with a fixed counter-blade (74) which is also situated inside the passage opening (71) and comprises a guiding slot (75) which is aligned with said access slot (30) when the plate (70) is in its outermost starting position, a pair of introduction rollers (32, 33) being provided in front of said guiding slot (75) and being mounted on said support-plate (29).

8. Device according to claim 7, characterized in that the shaping member (47) comprises suction and blowing channels (76) at least opposite the sliding pad (70).

9. Device according to claim 1, characterized in that the pair of introduction rollers comprises a drive roller (32) of large diameter and having a peripheral face with a high friction coefficient as well as a smooth pressing roller (33) of small diameter and having a peripheral face with a low friction coefficient, which latter permanently presses the individual band (8) against the drive roller (32).

10. Device according to claim 9, characterized in that the pressing roller (33) is mounted on the support plate (29) via a curved leaf spring (35) which is disposed edgewise so as to partly surround the drive roller (32) and to form with part of the periphery thereof a sort of funnel for guiding the end of the individual band (8), said funnel narrowing towards its front end (as taken in the moving direction of the individual band (8)) where said curved leaf spring (35) supports the ends of the pressing roller (33) and urges the latter against the drive roller (32).

11. Device according to claim 10, characterized in that the front end part of the spring (35) comprises two horizontal support tabs (36) which, by their free end, clamp the lower and upper supporting rings (37) of the pressing roller (33) and, between the two tabs (36) and the pressing roller (33), a guiding strip (38) of which the free end moves very close to the contact zone between the two introduction roller (32, 33).

12. Device according to claim 1, characterized in that at its lower end situated under the pre-winding chamber (23), the support-plate (29) is articulated on a horizontal pin (40) mounted in bearings (41) of the body (42) of the pre-winding unit (21).

13. Device according to claim 1, characterized in that the shaping member (47) is constituted by a solid or tubular rod (49) carrying at its upper end applicator fingers (48) and mounted for moving vertically inside the forming chamber (18) and the pre-winding chamber (23), and topping over without any noticeable play the base element (20).

14. Device according to claim 1, characterized in that the side face of the shaping member (47) has a shape which is homothetic to that of the vertical wall (25) of the forming chamber (18) and to that of the vertical wall (24) of the pre-winding chamber (23) and defines with said vertical wall (24), an annular guiding and pre-winding chamber of which the radial width is between two and five times the thickness of a banderole (2).

15. Device according to one of claims 1 and 13, characterized in that the transfer member (50) fast with the shaping member (47) comprises a plurality of radial drivers (51) situated in the annular chamber (23), plumb with said applicator fingers (48) and extending radially from the external vertical face of said shaping member (47) beyond the top of the corresponding applicator fingers (48), so that their free point is situated outside the periphery defined by the side wall (25) of the forming chamber (18).

16. Device according to one of claims 1 and 15, characterized in that the vertical wall (24) of the guiding and pre-winding chamber (23) is provided with vertical grooves of asymmetrical cross-section (52) in each one of which penetrates one driver (51), of the transfer member (50), and which are open towards said guiding chamber (23) and issue onto the horizontal upper face (42a) of the body of the pre-winding unit (21) against which rests the molding unit (17).

17. Device according to one of claims 1, 13, 15 and 16, characterized in that the molding unit (17) is resiliently spaced from the upper face (42a) of the body (42) of the pre-winding unit (21) by a distance of about a few millimeters, and the end of rising strokes of the drivers (51) of the transfer members (50) exceeds by a few millimeters the upper face (42a) of the pre-winding unit (21).

18. Device according to claim 1, characterized in that the simultaneous rising and lowering of the supporting tables (12 and 22) used to prevent any lengthening of the path of an individual band (8) between the longitudinal cutting unit (9) and its corresponding pre-winding unit (21) are ensured by a vertical guiding of the two tables (12, 22) and by a plurality of eccentrics (84, 85, 86) of same size and angular position, which actuate rollers (87, 88, 89) provided on the two tables (12, 22) and which are driven synchronously by means of a mechanism with toothed wheels (90, 91, 92, 93) and chains (94, 95) so that the two tables (12, 22) always simultaneously make the same rising or descending run.

19. Device according to claim 1 or 3, characterized in that the translational and pivoting movements of the supporting table (12) of the longitudinal cutting unit (9) are controlled by the vertical movements of the supporting table (22).

## Patentansprüche

1. Vorrichtung (1) zum Vorformen und Übertragen einer Banderole (2) in einer Warmformungsanlage von Behältern, die einen Formblock (17) aufweist, der mit einer Mehrzahl von vertikalen zylindrischen Formungskammern (18) versehen ist, die nach oben offen sind und an ihrem unteren Ende eine Öffnung (19) aufweisen, die geeignet ist, durch ein Bodenelement (20) geschlossen zu werden, das bezüglich dem Formblock (17) derart bewegbar ist, daß es durch die entsprechende Formungskammer (18) überdeckbar ist, die mit dem Formblock (17) zwischen einer oberen Stellung, genannt Warmformung, und einer niederen Stellung, genannt Ausformen der Behälter, bewegbar ist, wobei die Vorrichtung vom Typ ist, der aufweist:

eine Mehrzahl von einzelnen Bändern (8) von einer Zahl, die gleich jener der Formungskammern (18) ist, die in dem Formblock (17) vorgesehen sind, wobei von diesen einzelnen Bändern (8) Banderolen (2) quergeschnitten werden,

wenigstens eine Führungsrolle (83) mit einstellbarer Position für ein jedes der einzelnen Bänder (8),

eine Voraufwickeleinheit (21) der Banderolen (2), die unterhalb des Formblocks (17) angeordnet ist, der auf ihr ruht, angebracht auf einer Stützplatte (22), die vertikal zwischen einer Position, die der Warmformungsposition und einer Position bewegbar ist, die der Ausformungsposition des Formblocks (17) entspricht, und die eine Mehrzahl von zylindrischen, vertikalen Voraufwickelkammern (23) aufweist, die jede mit einer der Formungskammern (18) ausgerichtet ist, derart, daß sie mit ihrem oberen Rand eine ringförmige Halteschulter (27) bildet, die gleichzeitig die Bodenöffnung (19) der Verformungskammer (18) begrenzt,

eine Einführ- und Schneideeinheit (28) einer Banderole (2), pro Voraufwickelkammer (23), von der ein Bereich der seitlichen vertikalen Wand eine vertikale Zugangskerbe (30) aufweist, die schräg in die Voraufwickelkammer (23) mündet, wobei ein Messer (31) vorgesehen ist, das dazu dient, mit einer Gegenschneide (74) zusammenzuwirken, um das hintere Ende der Banderole (2) zu schneiden, das wenigstens teilweise in die Voraufwickelkammer (23) eingeführt ist, und ein Paar von Einführrollen (32, 33) aufweist, die stromauf des Messers (31) und der Kerbe angeordnet sind und geeignet sind, das einzelne Band (8), das zwischen diese beiden Rollen (32, 33) eingeklemmt ist, um einen Schritt bzw. eine Stufe anzutreiben, die gleich der Länge einer Banderole (2) ist,

ein Abkühlorgan (47), dessen Stange (49) die Voraufwickelkammer (23) durchquert, und deren oberer Bereich einerseits wenigstens einen Bereich der Bodenplatte (20) bildet und einen Querschnitt von der Form aufweist, die analog jedoch kleiner als jene der vertikalen Seitenwand (25) der Formungskammer (18) ist, derart, daß der Abstand zwischen der vertikalen Seitenwand (25) der Formungskammer (18) und der Umfangsseite des oberen Endes (48) des Abkühlorgans (47) wenigstens gleich der Dicke einer Banderole (2) ist, und andererseits geeignet ist, in die Formungskammer (18) einzudringen, und

ein Übertragungsorgan (50), das in der ringförmigen Führungs- und Voraufwickelkammer (23) vorgesehen ist, verbunden mit dem Abkühlorgan (47), und dazu dient, die Banderole (2) zu stützen, bis diese zur Formungskammer (18) durch eine Relativbewegung zwischen dem Übertragungsorgan (50) und der Formungskammer (18) zu übertragen,

**dadurch gekennzeichnet,**

daß sie weiterhin aufweist:

eine Stützrolle (6) des Mutterbandes, die in feststehenden Lagern angebracht ist, und

eine Einheit zum Längsschneiden (9) des Mutterbandes (7) in einelne Bänder (8), die auf einer Stützplatte (12) seitlich beabstandet zum Formblock (17) angeordnet ist, und,

daß die Stange (49) des Abkühlorgans (47) mit der vertikalen Zeitbahn (24) der Voraufwickelkammer (23) eine enge ringförmige Führungskammer bildet,

der Abstand zwischen dem oberen Ende des Abkühlorgans (47) und dem Übertragungsorgan (50) einerseits wenigstens gleich dem axialen Abstand zwischen dem Boden (30a) der Zugangskerbe (30) und dem Mittenbereich der Formungskammer (18) ist, und, andererseits, geringer ist als der Abstand zwischen dem oberen Ende der Formungskammer (18) in Warmformung und dem unteren Ende der Formungskammer in Ausformungsstellung;

die Gesamtheit der aufbauenden Elemente (29 bis 34 und 70 bis 75) der Einführ- und Schneideeinheit (28) einer Banderole (2) einerseits mit der Voraufwickeleinheit (21) mit Hilfe einer Stützplatte (29) verbunden wird, in der die Zugangskerbe (30) ausgebildet ist, und dessen Innenseite einen Bereich der vertikalen, seitlichen Seitenwand der Voraufwickelkammer (23) bildet, und andererseits mit Ausnahme des Messers (31) und der Gegenklinge (71) ständig vor der Zugangskerbe (30) zu der Voraufwickelkammer (23) installiert ist;

die Stützplatte (12) der Längsschneideeinheit (9) des Mutterbandes (7) in einzelne Bänder (8) vertikal bewegbar montiert ist, synchron mit den vertikalen Wegbewegungen der Stützplatte (22) der Voraufwickeleinheit (21) und des Formungsblocks (17); und

eine Spannrolle (15) vorgesehen ist auf der Bahn des Mutterbandes (7) zwischen seiner Stützrolle (6) und der Längsschneideeinheit (9), wobei die Spannrolle (15) gegen das Mutterband (7) drückt, derart, daß es die Unterschiede in der Länge des abgewickelten Mutterbandstücks aufgrund des vertikalen Verschiebens der Voraufwickeleinheit (21) der Banderolen (2) kompensiert.

2. Vorrichtung nach Anspruch 1, **dadurch gekennzeichnet,** daß die vertikale Weglänge der Stützplatte (12) der Längsschneideeinheit (9) identisch ist zu jener der Stützplatte (22) der Voraufwickeleinheit (21).

3. Vorrichtung nach Anspruch 1, **dadurch gekennzeichnet,** daß das stromabwärtige Ende (12a) der Stützplatte (12) gegenüber oder leicht seitlich eines seitlichen Endes des Formblockes (17) auf einer horizontalen Achse (64) angelenkt ist, die senkrecht zur Ebene ist, die durch eine vertikale Querseite des Formblockes (17) hindurchgeht, und getragen wird von der Stützplatte (22) des Formblockes (17), daß das stromabwärtige Ende (12a) der Stützplatte (12) an seiner Oberseite alle ersten Umlenkrollen (3a) der einzelnen Bänder (8) trägt, die gemäß einer Reihe parallel zur Gelenkachse oberhalb von dieser in derselben Höhenzone oder Niveauzone angeordnet sind, wie die entsprechenden Einführ- und Schneideeinheiten (28), und daß das stromaufwärtige Ende der Stützplatte (12) als Abdeckung (12c) ausgebildet ist, die stromauf offen ist und die eine feste Stützachse (68) bedeckt, parallel zur Gelenkachse (64) des stromabwärtigen Endes (12a) der Platte (12) und sehr nahe an der Längsschneidevorrichtung (9) angeordnet ist, getragen durch die Platte (12).

4. Vorrichtung nach Anspruch 1, **dadurch gekennzeichnet,** daß die vertikale Seitenwand (24) der Voraufwickelkammer (23) einen Umfang begrenzt, der ähnlich ist zu jenem der vertikalen Seitenwand (25) der Verformungskammer (18), jedoch leicht kleiner ist zum Umfang von dieser derart, um durch seinen oberen Rand eine ringförmige Rückhalteschulter (27) zu bilden, die gleichzeitig die Bodenöffnung (19) der Verformungskammer begrenzt.

5. Vorrichtung nach Anspruch 1, **dadurch gekennzeichnet,** daß das Messer (31) der Einführ- und Schneideeinheit (28) der Unterseite der Stützplatte (29) zugeordnet ist, und dazu dient, mit einem der Innenränder der Zugangskerbe (30) zusammenzuwirken, um das rückwärtige Ende der Banderole (2) zu schneiden, die vorher vollkommen in die Aufwickelkammer (23) eingeführt worden war, und daß jedes Paar von Einführrollen (32, 33), das vor dem konisch erweiterten Eingang einer zugehörigen Zugangskerbe (30) angeordnet ist, wenigstens eine Rolle aufweist, die in mit der Stützplatte (29) verbundenen Lagern montiert ist.

6. Vorrichtung nach Anspruch 1, **dadurch gekennzeichnet,** daß das Messer oder die Klinge (31) in der Nähe ihres oberen Endes auf der Stützplatte (29) mit Hilfe eines horizontalen Zapfens (45) angelenkt ist, der senkrecht zur Klinge (31) und der vertikalen ebenen Innenseite der Stützplatte (29) verläuft, in der auf drei seiner Seiten ein Permanentmagnetbalken (46) eingetaucht ist, der das Messer (31) gegen die inneren Ränder der Zugangskerbe (30) gedrückt hält.

7. Vorrichtung nach Anspruch 1, **dadurch gekennzeichnet,** daß die Einführ- und Querschneideeinheit (28) in jeder Voraufwickelkammer (23) ein vertikales Plättchen (70) aufweist, das in einer Durchtrittsöffnung (71) der Stützplatte (29) angeordnet ist, die horizontal gleitbeweglich ist und durch ihre vertikale Innenseite (70a) einen Bereich der seitlichen Seitenwand (24) der Voraufwickelkammer (23) bildet, daß die Zugangskerbe (30) in diesem vertikalen Plättchen (70) ausgebildet ist, daß das bewegbare Messer (31) in der Durchtrittsöffnung (71) neben der Außenseite des Plättchens 70) vorgesehen ist, und mit einer festen Gegenklinge (74) zusammenwirkt, die ebenfalls in der Durchtrittsöffnung (71) vorgesehen ist, und eine Führungskerbe (75) aufweist, die mit der Zugangskerbe (30) ausgerichtet ist, wenn das Plättchen (70) seine Ausgangsextremstellung besitzt, und daß ein Einführrollenpaar (32, 33) vor der Führungskerbe (75) vorgesehen ist und ausgebildet ist mit der Stützplatte (29) in Verbindung gehalten ist.

8. Vorrichtung nach Anspruch 7, **dadurch gekennzeichnet,** daß das Abkühlorgan (47) Ansaugkanäle und Auslaßkanäle (76) wenigstens gegenüber dem gleitbeweglichen Plättchen (70) aufweist.

9. Vorrichtung nach Anspruch 1, **dadurch gekennzeichnet,** daß das Paar der Einführrollen eine Antriebsrolle (32) aufweist, die einen großen Durchmesser und eine Umfangsseite mit starkem Reibungskoeffizienten aufweist, sowie eine glatte Andruckrolle (33), die einen geringen Durchmesser und eine Umfangsseite mit geringem Reibungskoeffizienten aufweist, und das einzelne Band (8) ständig gegen die Antriebsrolle (32) drückt.

10. Vorrichtung nach Anspruch 9, **dadurch gekennzeichnet,** daß die Andruckrolle (33) auf der Stützplatte (29) mittels einer gebogenen Blattfeder (35) angebracht ist, die hochkantig derart angeordnet ist, daß sie teilweise die Antriebsrolle (32) umgibt und mit einem Bereich des Umfangs von dieser eine Art Führungstrichter für das Ende des einzelnen Bandes (8) bildet, einen Trichter, der sich in Richtung seines vorderen Endes (genommen in Vorschubrichtung des einzelnen Bandes (8)) verjüngt, wo die gebogene Blattfeder (35) die Enden der Druckrolle (33) trägt und letztere gegen die Antriebsrolle (32) drückt.

11. Vorrichtung nach Anspruch 10, **dadurch gekennzeichnet,** daß der vordere Endbereich der Feder (35) zwei horizontale Stützungen (36) aufweist, die, durch ihr freies Ende, die unteren und oberen Stützringe (37) der Druckrolle (33) einklemmen und zwischen den beiden Zungen (36) und der Druckrolle (33) ein Führungsplättchen (38) aufweist, dessen freies Ende sich sehr nahe an der Berührungszone zwischen den beiden Einführrollen (32, 33) befindet.

12. Vorrichtung nach Anspruch 1, **dadurch gekennzeichnet,** daß an ihrem unteren Ende, das oberhalb der Voraufwickelkammer (23) angeordnet ist, die Stützplatte (29) auf einer horizontalen Achse (40) angelenkt ist, die in Lagern (41) des Körpers (42) der Voraufwickeleinheit (21) angebracht ist.

13. Vorrichtung nach Anspruch 1, **dadurch gekennzeichnet,** daß das Abkühlorgan (47) durch eine voll- oder rohrförmige Stange (49) ausgebildet ist, die an ihrem oberen Ende die Betätigungsfinger (48) trägt, und die vertikal bewegbar in der Verformungskammer (18) und der Voraufwickelkammer (23) angebracht ist und die ohne wesentliches seitliches Spiel das Bodenelement (20) bedeckt.

14. Vorrichtung nach Anspruch 1, **dadurch gekennzeichnet,** daß die seitliche Seite des Abkühlorgans (47) eine ähnliche Form zu jener der vertikalen Seitenwand (25) der Verformungskammer (18) aufweist und zu jener der vertikalen Seitenwand (24) der Voraufwickelkammer (23) aufweist und mit der vertikalen Seitenwand (24) eine ringförmige Kammer zum Führen und Voraufwickeln begrenzt, deren radiale Breite zwischen zwei- bis fünfmal der Dicke einer Banderole (2) beträgt.

**15.** Vorrichtung nach Anspruch 1 oder 13, **dadurch gekennzeichnet,** daß das Übertragungsorgan (50), das mit dem Abkühlorgan (47) verbunden ist, mehrere radiale Antriebsmitnehmer (51) aufweist, die in der ringförmigen Kammer (23) senkrecht bezüglich der Betätigungsfinger (48) angeordnet sind und sich radial, ausgehend von der vertikalen Außenseite des Abkühlorgans (47), über die Spitze der zugehörigen Betätigungsfinger (48) hinaus erstrecken, derart, daß ihre freie Spitze sich außerhalb des Umfangs befindet, der von der seitlichen Wand (25) der Verformungskammer (18) begrenzt wird.

**16.** Vorrichtung nach einem der Ansprüche 1 oder 15, **dadurch gekennzeichnet,** daß die vertikale Seitenwand (24) der Führungs- und Voraufwickelkammer (23) mit vertikalen Auskehlungen mit asymmetrischem Querschnitt (52) versehen ist, wobei in jede von ihnen ein Antriebsmitnehmer (51) des Übertragungsorgans (50) eindringt und die zu der Führungskammer (23) offen sind und an der horizontalen oberen Seite (42a) des Körpers der Voraufwickeleinheit (21) münden, gegen die sich der Formblock (17) abstützt.

**17.** Vorrichtung nach einem der Ansprüche 1, 13, 15 oder 16, **dadurch gekennzeichnet,** daß der Formblock (17) elastisch von der oberen Seite (42a) des Körpers (42) der Voraufwickeleinheit (21) um einen Abstand entfernt ist, in der Größenordnung von einigen Millimetern, und die Endposition des aufsteigenden Wegs der Antriebsmitnehmer (51) des Übertragungsorgans (50) um einige Millimeter die obere Seite (42a) der Voraufwickeleinheit (21) übersteht.

**18.** Vorrichtung nach Anspruch 1, **dadurch gekennzeichnet,** daß das gleichzeitige Aufsteigen und Absinken der Stützplatten (12 und 22), was dazu dient, jegliche Verlängerung der Bahn eines einzelnen Bandes (8) zwischen der Längsschneideeinheit (9) und seiner entsprechenden Voraufwickeleinheit (21) zu verhindern, durch eine vertikale Führung der beiden Platten (12, 22) und mehrere Exzenter (84, 85, 86) von derselben Größe und Winkelstellung, sichergestellt werden, die auf Rollen (87, 88, 89) wirken, die auf den beiden Platten (12, 22) angeordnet sind und auf synchrone Weise mit Hilfe eines Mechanismus mit Zahnrädern (90, 91, 92, 93) und Ketten (94, 95) derart angetrieben werden, daß die beiden Platten (12, 22) immer gleichzeitig denselben aufsteigenden und abfallenden Weg ausführen.

**19.** Vorrichtung nach Anspruch 1 oder 3, **dadurch gekennzeichnet,** daß die Translationsbewegungen und Schwenkbewegungen der Stützplatte (12) der Längsschneideeinheit (9) durch die vertikalen Bewegungen der Stützplatte (22) gesteuert werden.

Fig. 1

Fig. 2

Fig. 6

Fig. 7

Fig. 8

Fig. 9

Fig. 10

EP 0 249 550 B1

Fig.11

EP 0 249 550 B1

Fig 12

Fig 13

17  48  47  18  26  25  27  48  23  52  51  24  21  42

42a  27  70  20  30  31  32  74  30a  50  28  29  40  41  22

XIV

5

17  25  18  27  55  71a  72  71  71b  73  50  51  29  48  20  47  42  22  17  25  42a  51  23  24  52  48

EP 0 249 550 B1

26

EP 0 249 550 B1

Fig.14

Fig.15

Fig.16

Fig.17

27